# EUROPEAN PATENT APPLICATION

(11) **EP 1 632 541 A1**
(43) Date of publication of application: **08.03.2006**
(21) Application number: 04745569.6
(22) Date of filing: 03.06.2004
(51) Int. Cl.: C09J 201/00, C09J 7/02, B32B 27/00, B32B 27/30

(54) **TRANSPARENT GEL SELF-ADHESIVE AGENT, TRANSPARENT GEL SELF-ADHESIVE SHEET, OPTICAL FILTER FOR DISPLAY**

(30) Priority: 04.06.2003 JP 2003159551; 02.07.2003 JP 2003270408
(71) Applicant: MITSUBISHI PLASTICS INC., Chiyoda-ku, Tokyo 100-0005 (JP)
(72) Inventor: YAMAOKA, Tetsuya, c/o Mitsubishi Plastics, Inc., Nagahama-shi, Shiga 5268660 (JP); INENAGA, Makoto, c/o Mitsubishi Plastics, Inc., Nagahama-shi, Shiga 5268660 (JP)
(74) Representative: Gille Hrabal Struck Neidlein Prop Roos
(86) International application number: PCT/JP2004/007713
(87) International publication number: WO 2004/111152

(57) **Abstract**

A novel transparent adhesive agent is provided which allows a substrate and a surface material to be pasted together at room temperature, without requiring high temperature/high pressure treatment, and, furthermore, may confer an excellent damping property. A transparent gel adhesive is provided, wherein the transparent gel consists of a three-dimensionally cross-linked polymer swollen by a liquid containing a plasticizer and an inorganic fine particle, whose plasticizer is a fluid body with a solidifying point of -20°C or below and a content of 20 to 70 weight percent, whose inorganic fine particles have a primary average particle diameter of 200 nm or less and contained in an amount of 1 to 15 weight percent, whose resin that constitutes the three-dimensionally cross-linked polymer has a glass transition temperature (Tg) of -20°C or below, melt viscosity at 130°C of 50,000 mPa.s or above, whose transparent gel has a holding strength of 5 mm or less at a load of 490 mN (50 gf) × 2 hours and 40°C, in a test conforming to JIS Z0237.

## Description

### TECHNICAL FIELD

The present invention relates to a transparent gel adhesive agent and a transparent gel adhesive sheet used for pasting transparent materials, such as glass, transparent plastic materials, and the like, that constitute various window materials, various display panels, and the like, and an optical filter for display using the same.

### BACKGROUND ART

Glass materials are broadly used in various window materials, various display panels, and the like, with the advantages of abrasion resistance, weather resistance, transparency, and the like. However, as glass materials have the problems of being weak with respect to impacts and vibration, they are reinforced by various methods depending on the application, such as method for thermally or chemically strengthening glass, method of glass lamination, and method of lining a protective panel.

In recent years, as requirements for the improvement of crime prevention, safety, disaster prevention, light-weighting, impact resistance, and the like of window materials and various panels increased, composite laminated glasses, particularly, have been drawing attention in which a transparent resin panel, such as acrylic and polycarbonate (PC), and a glass panel are united for reinforcement via a bonding agent. This type of laminated glass composite material is constituted, in general, by intercalating a spacer with a given thickness between both panels, which are positioned so as to be separated from one another in the direction of the thickness, and injecting a bonding agent into this gap to bond them via the bonding layer (Japanese Patent Application Laid-Open No. H10-81548, Japanese Patent Application Laid-Open No. H11-58612, and the like).

In addition, as a protective structure for the display panel of flat image display devices, such as liquid crystal display (LCD), plasma display panel (PDP), organic EL display, and field emission display (FED), solar battery modules, sensors, gauges, meters, and the like, a method has been drawing attention of polylamination by layering surface protective panels, such as reinforced glass panels, polycarbonate (PC) panels, or acrylic panels, which have high impact resistance, on the surface of an image display panel. This type of protective panel, conventionally, was intended to prevent breakage of the glass display panel via polylamination by placing a space between an image display panel and a transparent plastic panel; however, it had problems, such as the thickness could not be narrowed due to intercalation of the space, double imaging occurred due to the space, which decreased visibility, size increase was difficult due to PC and acrylic, which may warp, such that, recently, methods have been proposed wherein the display panel and the protective panel are intimately attached via at least one layer or more of transparent adhesive materials. Specifically, a method wherein a liquid resin is injected between the display panel and the protective panel and cured at room temperature, a method wherein the bonding treatment is carried out with a hot-melt bonding agent which is heat-melted, a method wherein a commercially available hard transparent adhesive sheet is used for pressure bonding, and the like, have been proposed (Japanese Patent Application Laid-Open No. 2003-29644).

However, both in the former case of composite material glass and in the latter case of layering a display panel and a protective panel, most require bonding while applying heat or pressure or both with the autoclave method, or the like, in which case, bending and peeling, cracks, and the like would occur after bonding, since the linear expansion coefficients are different among different types of materials.

In view of such problems, a transparent lamination agent and a transparent adhesive sheet, such as the following, have been proposed, which can bond at room temperature, without requiring high temperature/high pressure treatment by autoclave.

For instance, in Japanese Patent Application Laid-Open No. H11-209150, an intermediate membrane for composite glass comprised of a resin having a prescribed viscoelastic property and a thickness in the range of 50 µm to 2000 µm is disclosed as an intermediate membrane for composite glass, allowing lamination processes to be performed at room temperature, without requiring high temperature/high pressure treatment by autoclave.

In Japanese Patent Application Laid-Open No. 2000-17780, a transparent composite panel, wherein a transparent resin panel, such as from acrylic resin, and a transparent inorganic glass panel are lightly pasted together with a transparent adhesive agent or bonding agent having elasticity, for instance, of the silicone series, is disclosed as a transparent composite panel, wherein, even if a difference in expansion and shrinkage occurs based on the difference in the thermal expansion rate of resin panel and inorganic glass panels due to a change in temperature, the inorganic glass panel does not break, and in the unlikely event it breaks, only the inorganic glass panel may be taken off to replace the inorganic glass panel.

In Japanese Patent Application Laid-Open No. 2000-301664, a transparent intermediate membrane, having at least one transparent adhesive agent layer and at least one transparent inorganic vapor deposition membrane layer with high gas barrier property, is disclosed as a transparent intermediate membrane allowing a synthetic resin panel and a glass panel to be pasted together at room temperature, without requiring high temperature/high pressure treatment by autoclave, which can prevent warping, cracking, and bubbling from occurring, even when used under thermal cycle conditions and under high temperature/high humidity conditions.

In Japanese Patent Application Laid-Open No. 2001-31451, an intermediate membrane for glass, constituted by a pressure-sensitive bonding agent layer comprised of an acrylic series pressure-sensitive bonding agent and a release film attached on both the front and the back bonding surfaces thereof, and whose pressure-sensitive bonding agent layer has a storage elasticity modulus G'(1 Hz) of 5×10³ to 5×10⁵ Pa (Pascal) at a measurement temperature of 20°C and a frequency of 1 Hz, and a storage elasticity modulus G'(10⁻⁷ Hz) of 5×10 to 5×10³ Pa at a reference temperature of 20°C and a frequency of 10⁻⁷ Hz, is disclosed as an intermediate membrane for composite glass allowing lamination processes to be performed at room temperature, without requiring high temperature/high pressure treatment by autoclave.

In Japanese Patent Application Laid-Open No. 2001-234129, an adhesive sheet provided with a first pressure-sensitive bonding layer, second pressure-sensitive bonding layers formed on both surfaces thereof, release films attached on the bonding surface of both pressure-sensitive bonding layers, the first pressure-sensitive bonding layer being constituted by a pressure-sensitive bonding agent having viscoelastic property with a storage elasticity modulus G'(1 Hz) of 5×10³ to 5×10⁵ Pa at a measurement temperature of 20°C and a frequency of 1 Hz, and a storage elasticity modulus G'(10⁻⁷ Hz) of 5×10 to 5×10³ Pa at a reference temperature of 20°C and a frequency of 10⁻⁷ Hz,
the second pressure-sensitive bonding layer being constituted by a pressure-sensitive bonding agent having viscoelastic property with a storage elasticity modulus G'(1 Hz) of 1×10⁴ to 5×10⁶ Pa at a measurement temperature of 20°C and a frequency of 1 Hz, and a storage elasticity modulus G'(10⁻⁷ Hz) of 1×10⁴ to 1×10⁶ Pa at a reference temperature of 20°C and a frequency of 10⁻⁷ Hz, is disclosed as an adhesive sheet allowing a composite glass laminated body to be manufactured at room temperature, without requiring high temperature/high pressure treatment by autoclave, and preventing warping and cracks from occurring, even if the manufactured composite glass laminated body is used under thermal cycle conditions.

In Japanese Patent Application Laid-Open No. 2002―348150, an adhesive sheet, constituted by an adhesive agent layer and release films attached on both the front and back surfaces thereof, the adhesive agent layer being constituted so as to be curable by ultraviolet light and having viscoelastic properties (a)(b) in the state before ultraviolet light curing and (c)(d) in the state after ultraviolet light curing, is disclosed as an adhesive sheet for intermediate membrane allowing a transparent laminated body to be manufactured at room temperature.
(a): storage elasticity modulus G'(1 Hz) of 5×10³ to 5×10⁵ Pa at a measurement temperature of 20°C and a frequency of 1 Hz
(b): storage elasticity modulus G'(10⁻⁷ Hz) of 5×10¹ to 5×10³ Pa at a reference temperature of 20°C and a frequency of 10⁻⁷ Hz
(c): storage elasticity modulus G'(1 Hz) of 1×10⁴ to 1×10⁶ Pa at a measurement temperature of 20°C and a frequency of 1 Hz
(d): storage elasticity modulus G'(10⁻⁷ Hz) of 1×10⁴ Pa or above at a reference temperature of 20°C and a frequency of 10⁻⁷ Hz

In Japanese Patent Application Laid-Open No. 2003-29645, a transparent adhesive material, provided with an elastic property with a storage elasticity modulus G'(1 Hz) of 5×10³ to 5×10⁵ Pa at a measurement temperature of 20°C and a frequency of 1 Hz, and a storage elasticity modulus G'(10⁻⁷ Hz) of 5×10 to 5×10³ Pa at a reference temperature of 20°C and a frequency of 10⁻⁷ Hz measurement temperature 20°C, is disclosed.

In Japanese Patent Application Laid-Open No. 2003-140559, a glass breakage prevention layer, comprised of a composite material of a transparent organic macromolecular substance and an organic layered clay mineral, is disclosed as a glass breakage prevention layer intercalated between the plasma display panel and the antiglare film on the visible side of a plasma display panel.

### Disclosure of the Invention

### Problems to Be Solved by the Invention

It is an object of the invention to provide a novel transparent adhesive agent and a transparent adhesive sheet allowing a substrate and a surface material to be pasted together at room temperature, without requiring high temperature/high pressure treatment by autoclave or the like, and furthermore may confer an excellent damping property, as well as an optical filter for display using the same. Means to Solve the Problems

The transparent adhesive agent proposed by the present invention is a transparent gel adhesive agent whose first characteristic is that it is constituted by a transparent gel comprised of a three-dimensionally cross-linked polymer swollen by a liquid containing a plasticizer and an inorganic fine particle; the second characteristic being that the aforementioned plasticizer is a fluid body, whose solidifying point is -20°C or below and is contained in the gel at 10 to 70 weight percent; the third characteristic being that the aforementioned inorganic fine particle has a primary average particle diameter of 200 nm or less and is contained in the gel at 1 to 15 weight percent; and the fourth characteristic being that the resin constituting the aforementioned three-dimensionally cross-linked polymer (meaning the resin before cross-linking) has a glass transition temperature (Tg) of -20°C or below and a melt viscosity at 130°C of 50,000 mPa.s or more.

The transparent gel adhesive agent of the present invention is preferably prepared in such a way that, in tests in accordance with JIS Z0237, the holding strength at a load of 490 mN (50 gf) × 2 hours and at 40°C is 5 mm or less.

Note that "gel" is a substance defined as a three-dimensionally cross-linked polymer swollen in a liquid (*Dictionary of Macromolecules,* Maruzen, printed 9.20.1994), having both the properties of a macromolecular solution and the properties of a rubber elastic body.

The transparent gel adhesive agent of the present invention can be sheet-formed and used as transparent gel adhesive sheet of the present invention. For instance, the transparent gel adhesive sheet of the present invention can be formed by sheet-forming a sol composition containing a resin constituting the above-mentioned three-dimensionally cross-linked polymer, cross-linking monomer, a photo-initiator, the above-mentioned plasticizer, and the above-mentioned inorganic fine particle, and photo-cross-linking the obtained sheet-formed body to gel the sol. However, the mode of utilization of the transparent gel adhesive agent of the present invention is not limited to the transparent gel adhesive sheet.

The transparent gel adhesive agent of the present invention can also be manufactured in a mode that makes coating easy (fluid, viscous fluid, and the like) and thus can form a transparent gel adhesive layer by coating with it. In addition, a transparent gel adhesive layer can be formed by sheet-forming it beforehand into a sheet having a uniform thickness and using this sheet-formed body as a layering. For instance, the sheet having a uniform thickness, which is obtained by preparing a sol composition containing the above-mentioned base polymer (namely, a resin that constitutes the three-dimensionally cross-linked polymer), a cross-linking monomer, a photo-initiator, the above-mentioned plasticizer, and the above-mentioned inorganic fine particle, sheet-forming this sol composition, and then photo-cross-linking, and which is a transparent gel adhesive sheet characterized by a holding strength of 5 mm or less at a load of 490 mN (50 gf) × 2 hours and at 40°C, in tests according to JIS Z0237, is preferred. However, it is not limited to these applications.

The transparent gel adhesive agent and the transparent gel adhesive sheet proposed by the present invention can paste together a substrate or the like and a surface material or the like at room temperature, without requiring high temperature/high pressure treatment by an autoclave or the like; furthermore, they can confer an excellent damping property. Therefore, an impact-absorbing laminated body provided with the transparent gel adhesive agent or the transparent gel adhesive sheet of the present invention as an intermediate layer can be formed. In so doing, if one or more types of panel material, sheet material, or film material chosen, for instance, from among glass matter, synthetic resin matter, metallic matter, and inorganic (ceramics) matter, is adopted as the layers on both sides, sandwiching the transparent gel adhesive agent or the transparent gel adhesive sheet, the effects of the present invention can be all the more appreciated. In the case where at least one layer among the layers on both sides sandwiching the transparent gel adhesive sheet in this impact-absorbing laminated body is a synthetic resin layer comprised of a synthetic resin matter, it is preferred that a transparent inorganic vapor deposition membrane layer with high gas barrier property is layered on the surface of the transparent gel adhesive sheet side of the synthetic resin layer in question. Layering such transparent inorganic vapor deposition membrane can prevent moisture and plasticizer from moving from the synthetic resin layer to the transparent gel adhesive sheet, allowing durability of the impact-absorbing laminated body to be further increased.

The transparent gel adhesive agent, the transparent gel adhesive sheet, and the impact-absorbing laminated body of the present invention can be used in various applications. For instance, they can be suitably used as a constitutive member of a surface structure in which impact resistance, crack prevention, vibration absorption, and the like are sought; such as in transparent window materials for applications related to machine tools, vehicles/marine vessels/aircrafts, pertaining to general housing, stores handling money or high value articles and the like, and showcases; furthermore, in flat image display devices, such as liquid crystal displays (LCDs), plasma displays (PDPs), organic EL displays, field emission displays (FEDs) ; and in transparent protective panel laminated bodies for solar battery modules, sensors, gauges, meters, and the like.

As one example of preferred application, an optical filter for display is proposed, which is provided with a transparent gel adhesive layer comprised of the above-mentioned transparent gel adhesive agent as the pasting layer for pasting onto the front surface of the display panel or onto the front surface of any layer layered on the front surface; or as the pasting layer for pasting between each layer that constitutes the optical filter, in the optical filter to be pasted onto the front side of the display panel. This optical filter for display is an optical filter for display that is to be pasted onto the front side of the display panel, namely, the viewer's side, and, for instance, can be used for direct pasting onto the front side surface of a plasma display panel (referred to as "PDP").

The upper limit value and the lower limit value of a range of numerical values specified by the present invention comprise the meaning to be contained in an equivalent range to the present invention, even in cases falling outside the numerical values specified by the present invention, as long as the same operation and effect as when the values are within the numerical value range in question is provided. In addition, "transparent" in the present invention means to include colorless transparent, colored transparent, and semi-transparent. In addition, in the present specification, when describing the optical filter for display, "front side" or "front surface" means the viewer's side or the surface on the viewer's side, "back side" or "back surface" means the side opposite the viewer's side or the surface on the side opposite the viewer's side. In addition, "display panel" means to include, in addition to plasma display panel (referred to as "PDP"), liquid crystal display, organic EL display, CRT display, and other displays.

### Brief Description of the Drawings

Fig. 1 is a schematic cross-sectional view for describing the structure of a display panel provided with an optical filter for display according to one example of the present invention.
Fig. 2 is a schematic cross-sectional view for describing the structure of a display panel provided with an optical filter for display according to a different example from the above example.
Fig. 3 is a schematic cross-sectional view for describing the structure of a display panel provided with an optical filter for display according to a different example from the above example.
Fig. 4 is a schematic cross-sectional view for describing the structure of a display panel provided with an optical filter for display according to a different example from the above example.
Fig. 5 is a schematic cross-sectional view for describing the structure of a display panel provided with an optical filter for display according to a different example from the above example.
Fig. 6 is a schematic cross-sectional view for describing the structure of a display panel provided with an optical filter for display according to a different example from the above example.
Fig. 7 is a schematic cross-sectional view for describing the structure of a display panel provided with an optical filter for display according to a different example from the above example.
Fig. 8 is a perspective view showing one example of electromagnetic wave shielding film or sheet.
Fig. 9 is an enlarged perspective view of relevant portions, showing enlarged the mesh portion of the electromagnetic wave shielding film or sheet shown in Fig. 8.
Fig. 10 is an enlarged cross-sectional view of relevant portions showing enlarged a cross-section of the mesh portion of the electromagnetic wave shielding film or sheet shown in Fig. 8.
Fig. 11 is an enlarged cross-sectional view of relevant portions, showing enlarged a cross-section when a transparent gel adhesive layer has been layered over the mesh portion of the electromagnetic wave shielding film or sheet shown in Fig. 8.
Fig. 12 is an exploded perspective view showing one example of PDP panel surface structure.
Fig. 13 is a figure for explaining the test apparatus for the drop ball impact test.

### Best Mode for Carrying Out the Invention

Embodiments of the present invention will be described in the following; however, the scope of the present invention is not limited to the embodiments described below.

An exemplary embodiment of the present invention is the transparent gel adhesive agent, which is a transparent gel comprised of a three-dimensionally cross-linked polymer swollen by a liquid containing a plasticizer and an inorganic fine particle, and provided with the desired range of holding strength, damping power, and adhesive strength.

The type of resin (including difference in molecular weight) constituting the three-dimensionally cross-linked polymer (meaning the resin prior to cross-linking; hereinafter also referred to as "base polymer"), the cross-linking density, the type and content of the plasticizer, the shape and content of the inorganic fine particle, and the like can be cited as main factors for adjusting the holding strength, damping power, and adhesive strength of the transparent gel adhesive agent.
Holding strength, damping power, and adhesive strength antagonize each other, and each physical property cannot be controlled independently. The holding strength can be adjusted mainly by the cross-linking density of the gel and the inorganic fine particle (in particular, the particle diameter and mixing amount thereof), and the cross-linking density can be controlled mainly by the cross-linking method and the conditions thereof. In addition, the damping power is influenced by the degree of swelling of the gel, and the degree of swelling can be adjusted mainly by the type and content of the plasticizer. In addition, the adhesive strength can be adjusted mainly by the melt viscosity and the glass transition temperature (Tg) of the base polymer, and the melt viscosity of the base polymer can be adjusted mainly by the molecular weight of the polymer.
However, the damping power and adhesive strength can be specified indirectly and simultaneously by specifying the type of base polymer (in particular, the glass transition point and melt viscosity), the type and content of the plasticizer, and the particle diameter and content of the inorganic fine particle.

### (Three-Dimensionally Cross-Linked Polymer)

The three-dimensionally cross-linked polymer that constitutes the scaffold (network) of the transparent gel adhesive agent can be formed by cross-linking a base polymer.

Examples of base polymer include copolymer of the (meth)acrylate ester series and urethane resins, among which, copolymer of the (meth)acrylate ester series are preferred. As the (meth)acrylate to use for forming copolymer of the (meth)acrylate ester series, that is to say, alkyl acrylate or alkyl methacrylate components, it is preferred to use one type of alkyl acrylate or alkyl methacrylate whose alkyl group is one among n-octyl, iso-octyl, 2-ethylhexyl, n-butyl, isobutyl, methyl, ethyl, and isopropyl, or a mixture of two types or more chosen therefrom.
As other components, acrylate or methacrylate having an organic functional group, such as carboxyl group, hydroxyl group, and glycidyl group, may also be copolymerized. Specifically, a copolymer of the (meth)acrylate ester series can be obtained by heat polymerization with monomeric components comprised of the aforementioned alkyl (meth)acrylate component and (meth)acrylate component, having an organic functional group adequately and selectively combined as the starting materials.

A resin with a glass transition temperature (Tg) of -20°C or lower, preferably - 60°C to -40°C, and a melt viscosity at 130°C of 50,000 mPa·s or more, preferably 200,000 to 700,000 mPa·s, particularly preferably 200,000 to 500,000 mPa·s, can be used as the base polymer.
If the Tg and melt viscosity of the base polymer are within the above-mentioned limits, at least the adhesive strength of the transparent gel adhesive agent can be adjusted to the desired range. If the melt viscosity is less than 50,000 mPa s, obtaining shape stability at sheet-forming time becomes difficult, and at the same time, obtaining sufficient flexibility of the sheet after cross-linking becomes difficult. In addition, if Tg is higher than -20°C, it causes a decrease in the durability of the laminated body at low temperature.
If Tg is -60°C to -40°C and if the melt viscosity is 200,000 to 700,000 (mPa.s), flexibility and durability can be made all the more desirable.

The glass transition temperature (Tg) and melt viscosity of the base polymer can be measured using a B-type viscometer (for instance, the Dynamic Analyzer RDA-II, a visco-elastometer manufactured by Rheometrics). In so doing, for melt viscosity, it suffices to read the viscosity (η_{Υ}) value when measured with the condition: thickness of parallel panels, ø=25 mm; distortion, 2%;temparature, 130°C; frequency, 0.02 Hz. For Tg, it suffices to read the temperature showing the maximum value for Tan δ when measured with the condition: thickness of parallel panels, ∅=25 mm; distortion, 2%; frequency, 1 Hz.

The mixing amount of base polymer depends on the type of polymer, and if it is, for instance, a copolymer of the (meth)acrylate ester series, 10 to 90 weight percent, in particular 30 to 70 weight percent, is preferred.

The cross-linking method for cross-linking a base polymer into a three-dimensionally cross-linked polymer and the type of cross-linking agent used in so doing are not limited in particular. Since the cross-linking density, which causes the holding strength to fluctuate, varies according to the cross-linking method and conditions thereof, it is necessary to select the cross-linking method and conditions thereof, that is to say, the type and quantity of the cross-linking agent and the cross-linking conditions, in such a way as to adjust the holding strength ultimately in the desired range.
The method of mixing and dispersing a cross-linking monomer, a photo-initiator, and an inorganic fine particle in a base polymer, then forming a three-dimensionally cross-linked polymer by photo-cross-linking (ultraviolet irradiation) can be cited as one example of preferred cross-linking method. As the mixing amount of the cross-linking monomer allows the cross-linking density to be adjusted and allows the impregnation amount of plasticizer to be adjusted, the flexibility of the transparent gel adhesive agent can be adjusted to a preferred range.

The combination of a copolymer of the (meth)acrylate ester series containing an α,β unsaturated carboxylic acid, a (meth)acrylate monomer containing an organic functional group that reacts with an unsaturated carboxylic acid, and a photo-initiator can be cited as a preferred combination of base polymer, cross-linking monomer, and photo-initiator.
For instance, a copolymer wherein at least one type or more selected from iso-octyl acrylate, n-octyl acrylate, n-butyl acrylate, 2-ethylhexyl acrylate, and the like and acrylic acid are copolymerized can be cited as a copolymer of the (meth)acrylate ester series containing an α,β unsaturated carboxylic acid.
Meanwhile, (meth)acrylate monomers having a functional group reacting with the aforementioned unsaturated carboxylic acid, such as a (meth)acrylate monomer containing a glycidyl group, a (meth)acrylate monomer containing a hydroxy group, and a (meth)acrylate monomer containing an isocyanate group, can be cited as a (meth)acrylate monomer containing an organic functional group. The content thereof is preferably 0.01 to 20 weight parts with respect to 100 weight parts of base polymer (0.01 to 2.3 weight percent in the gel), in particular 3 to 15 weight parts (2 to 5 weight percent in the gel).

As photo-initiators, those without color and odor are preferred. For instance, using any from benzophenone and hydroxy-cyclohexyl-phenyl ketone, or a mixed component comprised of the combination of two or more thereof, is adequate.
It suffices to adjust the quantity of photo-initiator to add suitably according to the type of photo-initiator; for instance, when using benzophenone, 0.05 to 10 weight parts with respect to 100 weight parts of base polymer (0.04 to 1.2 weight percent in the gel), in particular 1 to 7.5 weight parts (0.7 to 2.5 weight percent in the gel), is preferred.

### (Plasticizer)

The plasticizer, by adjustment of the type and quantity thereof, allows the degree of swelling of the transparent gel adhesive agent to be adjusted and, as a result, allows the damping power to be adjusted. From this point of view, it is preferred that a plasticizer with a solidifying point of -20°C or below and which is a fluid is contained in the gel at 10 to 70 weight percent (11 to 600 weight parts with respect to 100 weight parts of base polymer). Note that obtaining impact resistance becomes difficult if the plasticizer content is less than 10 weight percent and, conversely, obtaining adhesiveness becomes difficult if 70 weight percent is exceeded. In particular, when the application as adhesive agent for PDP panel is considered, it is preferred that a plasticizer with a solidifying point of -80°C to -40°C is contained in the gel at 30 to 50 weight percent (45 to 150 weight parts with respect to 100 weight parts of base polymer).

For the plasticizer, any plasticizer among the adipic acid ester series, the phthalate ester series, the phosphoester series, the trimellitic acid ester series, the citric acid ester series, the epoxy series and the polyester series, or a mixed component comprised of the combination of two or more species thereof can be used, and those that are compatible with copolymer of the (meth)acrylate ester series are preferred. In addition, in case where photo-cross-linking uses ultraviolet light, it is preferred to use a plasticizer that does not absorb ultraviolet light.

### (Inorganic Fine Particle)

If a three-dimensionally cross-linked polymer is merely swollen by a liquid plasticizer, the viscosity of the gel adhesive agent prior to cross-linking (that is to say, the sol stage) is too low, making sheet-forming difficult. In addition, post-cross-link stretch cannot be obtained, leading to a soft but brittle sheet. Therefore, as a result of earnest studies by the present inventors, it was discovered that, by combining a prescribed amount of inorganic fine particle having a prescribed particle diameter, the gel adhesive agent could be increased in viscosity to a suitable degree without losing transparency, the desired holding strength and adhesive strength could be obtained, and a flexible gel, which can be easily sheet-formed and having viscoelastic properties, could be prepared.

The inorganic fine particle has a primary average particle diameter of 200 nm or less and preferably 0.1 nm to 50 nm, among which 1 nm to 20 nm being particularly preferred, and it is preferred that inorganic fine particle with such particle diameter be contained in the gel at 1 to 15 weight percent (1 to 130 weight parts with respect to 100 weight parts of base polymer), and particularly 2 to 10 weight percent (2 to 10 weight parts with respect to 100 weight parts of base polymer), among which 3 to 5 weight percent in particular.
As mentioned above, the inorganic fine particle has the effect of increasing the viscosity of the gel adhesive agent to make sheet-forming easy, and conferring elasticity to post-cross-link gel adhesive agent or gel adhesive sheet, while the particle diameter of the inorganic fine particle is also important to prevent inhibition of transparency and ultraviolet photo-cross-linking.
In order to fulfill form processability, post-cross-link elastic strength and holding strength, and transparency, it is preferred that an inorganic fine particle with a particle diameter of 100 nm or less is contained in the gel at 2 to 10 weight percent.
As far as the type of inorganic fine particle is concerned, metal oxides, such as alumina (Al₂O₃), zinc oxide (ZnO), and indium-tin oxide (ITO); silicate compounds, such as silica; diatomaceous earths; metallic fine particles, such as aluminum (AI), silver (Ag), and the like, can be used; and it is preferred that they are suitably chosen taking dispersability into account.
In addition, it is also possible to mix materials other than those mentioned above to an extent that does not inhibit transparency.

Here, comparing the above-mentioned inorganic fine particle and, for instance, the organic layer clay mineral described in Japanese Patent Application Laid-Open No. 2003-140559, the inorganic fine particle is characterized by a high affinity for water, which makes whitening when exposed to high humidity difficult. This is thought to be due to the moisture absorbed by the adhesive agent being absorbed by the inorganic fine particle, making formation of moisture particulate, which causes whitening, difficult. From the viewpoint of hydrophilicity, moisture adsorptivity, and refractive index of the fine particle itself being similar to those of acrylic resin, the most preferred is silica (silicon dioxide).
In addition, on the point of the form, the above-mentioned inorganic fine particle results from secondary particulates, which consist of the aggregation of approximately spherical primary particulates, broken into primary particulates by physical kneading or the like and re-dispersed, and also differs from the organic layer clay mineral on this point.

### (Transparent Gel Adhesive Agent)

The transparent gel adhesive agent of the present embodiment needs to have the holding strength, adhesive strength, and damping power adjusted to the desired range. Among them, adjusting to a holding strength of 5 mm or less at a load of 490 mN (50 gf) × 2 hours and at 40°C, per tests in accordance with JIS Z0237, particularly to a range of 0.5 mm to 2.0 mm, among which 0.5 mm to 1 mm is preferred, from the point of balance between flexibility and durability.
Although holding strength, adhesive strength, and damping power are physical properties that antagonize each other, if the holding strength is adjusted to the above range in the composition described above, all the elements of holding strength, adhesive strength, and damping power of the transparent gel can be adjusted to within the range sought by the present invention. A substrate and a surface material can be pasted together to form a laminated body at room temperature, without having to apply high pressure. Furthermore, the laminated body can be provided with excellent impact absorption and durability.
The holding strength is also an indicator for indicating flexibility and durability, which can be determined by pasting a 38 µm PET film at the back of the sheet, then, bonding by a pressure-bonding method comprised of one round trip of a 2-kg roll using an SUS panel (20 mm×20 mm) as stipulated in JIS Z0237, , applying a load of 490 mN (50 gf) for 2 hours in an environment of 40°C, and measuring the length of the shift in compliance with JIS Z0237.
Note that JIS Z0237 stipulates applying a load of 1 kgf; however, as the transparent gel adhesive agent of the present embodiment is softer than a conventional adhesive agent, if a load of 1 kgf or 500 gf is applied, it drops immediately, such that the capability cannot be evaluated. Therefore, it was decided to measure the holding strength in the present invention by modifying the load to 490 mN (50 gf), so that the capability of the transparent gel adhesive agent of the present invention could be evaluated properly while being as much in compliance with JIS Z0237 as possible.

The holding strength of the transparent gel adhesive agent can be adjusted mainly by changing the cross-linking density and the inorganic fine particle (particle diameter and mixing amount), or the like, and the cross-linking density can be adjusted to the desired range by adjusting the cross-linking method and the conditions thereof; for instance, in the case of photo-cross-linking, the amount of photo-initiator, the cumulative amount of light (cumulative value of quantity of irradiation and duration of irradiation), and the like.

Since such a transparent gel adhesive agent is provided with the desired adhesive strength at room temperature, sequentially layering, for instance, a substrate, a transparent gel adhesive agent, and a surface material and passing them between a rubber roll is sufficient to allow them to be pasted together at room temperature. Furthermore, since it is provided with the desired holding strength, when pasting different types of material together, even if physical properties, such as linear expansion coefficient, are different from one another, the difference in the behavior of each member can be absorbed, allowing transparency to be maintained also satisfactorily, without occurrence of warping, peeling, cracking, and the like after layering, and at the same time allowing the laminated body to be provided with an excellent damping effect.

Note that, the transparent gel adhesive agent of the present invention can also be coated directly onto the surface of, for instance, a glass material (including panel, sheet, and film) or a plastic material (including panel, sheet, and film), it is preferably sheet-formed into a sheet with a uniform thickness to make it a transparent gel adhesive sheet.

### (Transparent Gel Adhesive Sheet)

An example of preferred embodiment of the transparent gel adhesive sheet will be described in the following. However, the transparent gel adhesive sheet of the present invention is not limited to the embodiment described below.

The transparent gel adhesive sheet of the present embodiment can be manufactured by preparing a sol composition containing a base polymer, a cross-linking monomer, a photo-initiator, a plasticizer, and an inorganic fine particle; sheet-forming this sol composition; then photo-cross-linking to gel the sol.

More specifically, the gel adhesive sheet can be obtained by preparing a sol composition containing a copolymer of the (meth)acrylate ester series, a cross-linking monomer, an ultraviolet light reactive photo-initiator, a plasticizer, and an inorganic fine particle, coating this sol composition between transparent release films at an adequate thickness, and sheet-forming; thereafter, using a high-voltage mercury lamp or the like, irradiating with ultraviolet through the release film, and cross-linking.
The cross-linking density and holding strength can be adjusted during irradiation with ultraviolet light by adjusting the amount of irradiation and the duration of irradiation according to the quantities of monomer and photo-initiator.

If the above transparent gel adhesive sheet is sandwiched between release sheets or film materials to constitute a laminated sheet, peeling the release sheet or film on one side and stacking an adhesion target body (for instance, a substrate), which is to be adhered to the adhesive surface of the transparent gel adhesive sheet, then peeling the release sheet or film on the other side and stacking a target body (for instance, a surface material) onto the adhesive surface of the transparent gel adhesive sheet is sufficient to easily paste together adhesion target bodies to be adhered (for instance, a substrate and a surface material) with a given thickness.
Furthermore, since the transparent gel adhesive sheet is provided with the desired adhesive strength at room temperature, sequentially layering, for instance, a substrate, a transparent gel adhesive sheet, and a surface material and passing them between a rubber roll is sufficient to allow them to be pasted together at room temperature. Since it is provided with the desired holding strength as described above, the difference in the behavior of the members to be pasted together can be absorbed, even when pasting different types of material together, allowing transparency to be maintained also satisfactorily without occurrence of warping, peeling, cracking, and the like after layering, and at the same time allowing the laminated body to be provided with an excellent damping effect.

The thickness of the transparent gel adhesive sheet is preferably adjusted according to the entities to be pasted together or the damping power sought and the like, generally on the order of 0.5 mm to 2.0 mm, in particular 0.5 mm to 1. 0 mm, is preferred.

### (Impact-Absorbing Laminated Body)

An example of preferred embodiment of an impact-absorbing laminated body, provided with a transparent gel adhesive layer comprised of the above-mentioned transparent gel adhesive agent, or transparent gel adhesive sheet as an intermediate layer of the laminated body, will be described in the following. However, the impact-absorbing laminated body of the present invention is not limited to the embodiment described below.

In the impact-absorbing laminated body according to the present embodiment, a panel material, a sheet material, or a film material, comprised of one or more types of materials chosen from glass matter, synthetic resin matter, metallic matter, and inorganic (ceramics) matter, can be adopted for the layers on the two sides that sandwich a transparent gel adhesive agent or a transparent gel adhesive sheet; in other words, the layers pasted together with the transparent gel adhesive agent and a transparent gel adhesive sheet.

The layers on the two sides that sandwich the transparent gel adhesive agent or the transparent gel adhesive sheet may be of the same material or a different material. Also, the thickness of both layers can be of the same order or can be of different thickness.
For instance, the laminated body may be a combination of materials having different linear expansion coefficients, such as glass matter/synthetic resin matter, glass matter/metallic matter, and the like, or the laminated body may be a combination of different thicknesses, such as panel/sheet, panel/film, and the like.
In addition, when the above-mentioned transparent gel adhesive agent and transparent gel adhesive sheet is used as an intermediate layer, surfaces to be pasted together that are not smooth can still be pasted together smoothly. As the above-mentioned transparent gel adhesive agent or transparent gel adhesive sheet is provided with a prescribed holding strength, it absorbs the asperities and allows for a smooth pasting together.
When manufacturing such an impact-absorbing laminated body, since the above-mentioned transparent gel adhesive agent and transparent gel adhesive sheet are provided with a prescribed adhesive strength, holding strength, and damping power, it suffices to layer the transparent gel adhesive agent and the transparent gel adhesive sheet as intermediate layers, pass them through nip rolls (rubber rolls), and apply a slight pressure at room temperature (without heating) to allow both layers to be pasted together, absorbing the difference in the behavior and asperities of each material, and allowing the laminated body to be manufactured.

In constituting the above-mentioned impact-absorbing laminated body, in cases where at least one of the layers on the two sides sandwiching the transparent gel adhesive sheet is a synthetic resin layer comprised of a synthetic resin matter, it is preferred that a transparent inorganic vapor deposition membrane layer having high gas barrier property is layered over the surface on the transparent gel adhesive sheet side of the synthetic resin layer.
In so doing, a vapor deposition membrane comprised of, for instance, a metal oxide, such as silicon oxide, aluminum oxide, zinc oxide, and indium tin oxide (ITO), or any of silicon nitride and magnesium fluoride, suffices as the transparent inorganic vapor deposition membrane layer. It is preferred that the transparent inorganic vapor deposition membrane layer is a vapor deposition membrane with an oxygen permeability (JIS K7162) of 2.0 (cc/m²·24 hr) or less and a water vapor permeability (JIS K7129) of 1.5 (g/m²·24 hr) or less. Then, it is preferred that the thickness of the transparent inorganic vapor deposition membrane layer is thin, in a range that satisfies the above permeabilities.
A transparent inorganic vapor deposition membrane may be directly vapor-deposited, or a film having a high gas barrier property, has been vapor-deposited at least on one side may also be layered via a bonding agent, as methods for forming the transparent inorganic vapor deposition membrane layer.
Intercalating a transparent inorganic vapor deposition membrane layer in this way can prevent moisture and plasticizer from moving from the synthetic resin layer to the transparent gel adhesive sheet, allowing durability of the impact-absorbing laminated body to be further increased.

### (Optical Filter for Display)

An optical filter for display, provided with a transparent gel adhesive layer comprised of the transparent gel adhesive agent or transparent gel adhesive sheet, will be described in the following as one example of preferred mode of use for the transparent gel adhesive agent or transparent gel adhesive sheet of the present invention. However, the optical filter for display of the present invention is not limited to the embodiment described below.

In recent years, the plasma display panel (referred to as "PDP") has been drawing attention as one among large flat panel displays, the market thereof rising quickly as a replacement for Braun tube televisions for household use. In prior art, for this type of display structure, the common ones were those constituted by layering an optical filter, having reinforced glass as the base body, on the front side of a panel that constitutes PDP (refereed to as "PDP panel") that emits red (R), green (G), and blue (B) display lights, providing a space separating it from the PDP panel, while placing this laminated body inside an external jacket in order to protect the PDP panel from external impacts and the like.
However, there was the problem that, when a space is intercalated between the PDP panel and the optical filter, external light that enters the display surface from the exterior is reflected by the front surface of the optical filter and the front surface of the PDP panel, giving rise to the phenomenon of double imaging in which multiple overlapping images are projected, decreasing the displayed image quality of the PDP panel. Therefore, recently, PDPs having a constitution wherein an optical filter is directly pasted onto the PDP panel via an adhesive layer have been disclosed (Japanese Patent Application Laid-Open No. H11-119666, Japanese Patent Application Laid-Open No. 2002-251144).
However, the following problems exist when directly pasting an optical filter onto a display panel.
Since, structurally, there is less damping effect (impact resistance) compared to the structure in which the optical filter is layered by providing a space that separates it from the PDP panel, there was the risk that impact-resistance capability that protects the PDP panel from external impact and the like becomes insufficient.
In addition, in the case of PDP, since an electromagnetic wave is generated concomitantly with operation, even with a slight external leak, there is the risk of adverse effect on human body or surrounding instruments, necessitating means for preventing leakage of the electromagnetic wave onto the viewer's side, such as, for instance, layering in front of the PDP, via a transparent elastic bonding agent, an electric conductive mesh (called " electromagnetic wave shielding film") comprised of a metal fiber with a wire diameter of 1 µm to 1 mm (Japanese Patent Application Laid-Open No. H11-119666). However, the mesh surface of this type of electromagnetic wave shielding film presents asperities, such that, if an optical filter is pasted onto these asperities via a bonding agent, bubbles arise inside the bonding agent, decreasing the picture quality on the PDP panel. Therefore, some sort of degassing treatment is necessary after bonding the optical filter, and this complicates the operation procedure and is the one cause for cost increase.
In addition, when pasting an optical filter directly onto a PDP panel with a bonding agent or an adhesive agent used in prior art, as progression of the wetting is slow, a large number requires high pressure or high temperature during pasting, such that there is the risk of destroying the expensive PDP panel module.
Further additionally, while directly pasting the optical filter, when pasting fails due to causes such as pinching of foreign matter or positional offset, or when the necessity of filter replacement arises and the like, there is the necessity of detaching the expensive panel module without damaging it; however, adhesive agent and bonding agent used in prior art has strong bonding strength as a general rule, such that almost none can be detached easily.
Therefore, it is valuable if an optical filter for display can be provided which is an optical filter that can be pasted directly onto the front side of the display panel, has an excellent impact resistance that protects the display panel from external impact, can be pasted easily without requiring high pressure or high temperature, can be neatly pasted without generating bubbles, even if the pasting surface where the optical filter is to be pasted is provided with asperities, such as the mesh surface of an electromagnetic wave shielding film, and at the same time can be detached easily.

The present inventors invented an optical filter for display, which is an optical filter to be pasted onto the front side of the display panel, provided with a transparent gel adhesive layer comprised of the above-mentioned transparent gel adhesive agent as the pasting layer for pasting onto the front surface of the display panel or onto the front surface of any layer layered on the front surface, or as the pasting layer for pasting between each layer that constitutes the optical filter.
Note that "front side" or "front surface" means the viewer's side or the surface on the viewer's side; "back side" or "back surface" means the side opposite to the viewer's side or the surface on the side opposite to the viewer's side. In addition, "display panel" means to include, in addition to plasma display (referred to as "PDP"), liquid crystal display, organic EL display, CRT display, and other displays.

An optical filter for display provided with a constitution comprised of a filter main body, comprised of the layering of any layer from among a low visible light reflection layer, a near-infrared radiation cut layer, an image quality correction layer, an electromagnetic wave shielding layer, and a moisture-permeation prevention layer, or a plurality of layers comprised of the combination of two or more types chosen from among these layers, layered on one side or both sides of a transparent base body comprised of a transparent film or sheet, a transparent gel adhesive layer being layered on the back surface of the filter main body, can be cited as one example of an optical filter for display of the present invention.

In the following, some exemplary embodiments of optical filter for display proposed by the present inventors will be described.

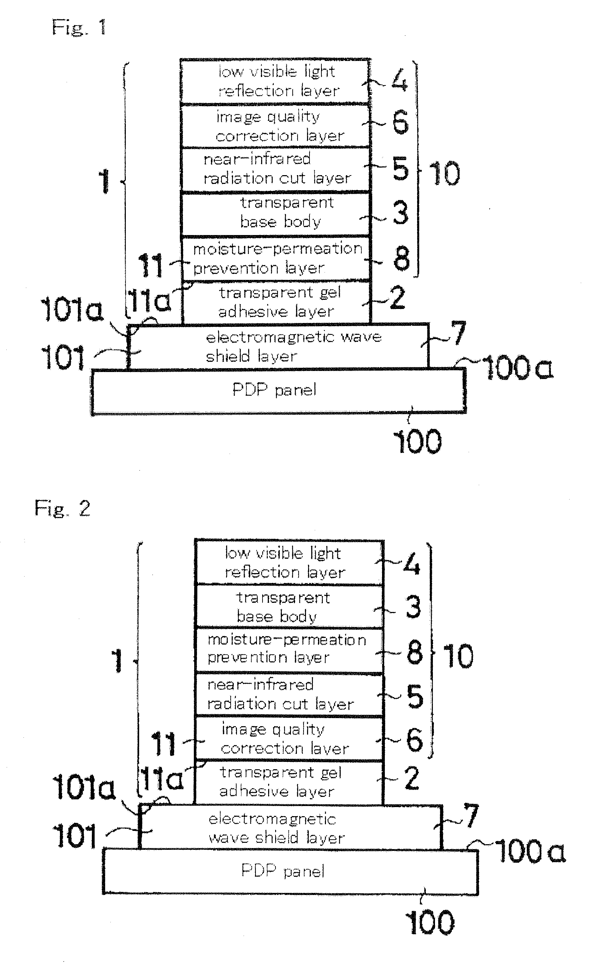

First, an optical filter for display (Fig. 1) comprised of the provision of a filter main body, wherein a near-infrared radiation cut layer, an image quality correction layer, and a low visible light reflection layer are sequentially layered on the front surface of a transparent base body, and a moisture-permeation prevention layer is layered on the back surface (surface on the pasting side) of the transparent base body, a transparent gel adhesive layer being layered on the back surface of the moisture-permeation prevention layer, can be cited.
Next, an optical filter for display (Fig. 2) comprised of the provision of a filter main body, wherein a low visible light reflection layer is layered on the front surface of a transparent base body, and a moisture-permeation prevention layer, a near-infrared radiation cut layer, and an image quality correction layer are sequentially layered on the back surface of the transparent base body, a transparent gel adhesive layer being layered on the back surface of the image quality correction layer, and the like, can be cited.

An optical filter for display, provided with a constitution comprised of an electromagnetic wave shielding layer as the layer on the back-most surface side of the filter main body (the layer on the pasting side), one side edge portion of an electric conductive member being connected to the conductive surface of the electromagnetic wave shielding layer (back surface), the electric conductive member covering the side surface portion of the filter main body while the other side edge portion of the electric conductive member being located within the front-most surface of the filter main body, a transparent gel adhesive layer being layered on the back surface of the filter main body with the one side edge portion of the electric conductive member in an intercalated state, can be cited as one other example.
Here, as long as the electric conductive member is a material that can conduct electricity, the material is not limited in particular. In addition, the morphology thereof is facultative and may have, as described below, tape shape, film or sheet shape, string shape, or other shapes.

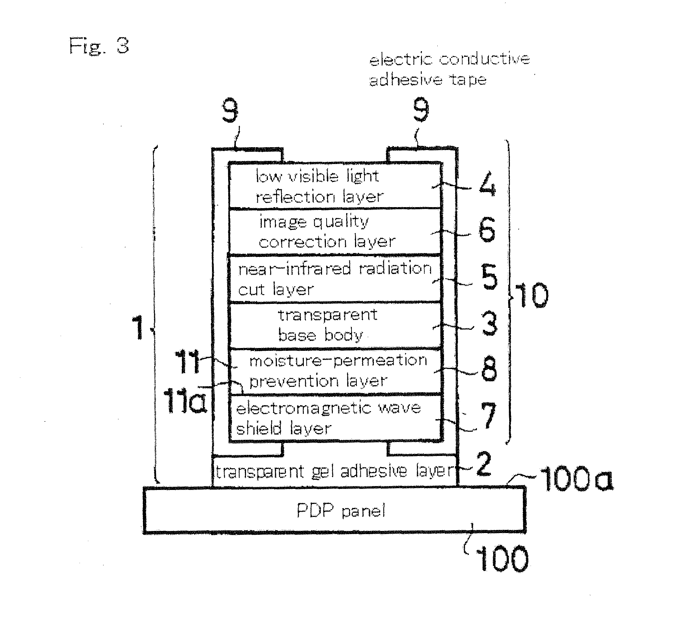

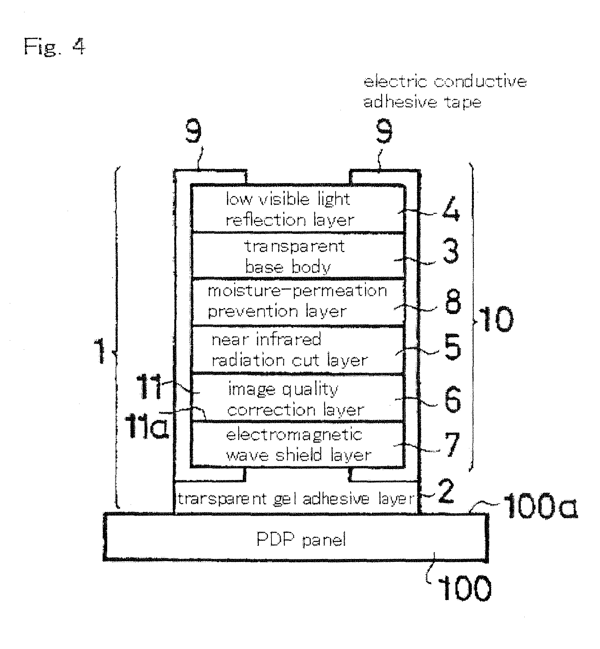

Specifically, an optical filter for display (Fig. 3), provided with a constitution comprised of the provision of a filter main body, wherein, on one hand, a near-infrared radiation cut layer, an image quality correction layer, and a low visible light reflection layer are sequentially layered on the front surface of a transparent base body, on the other hand, a moisture-permeation prevention layer and an electromagnetic wave shielding layer are sequentially layered on the back surface of the transparent base body, the side surface portion of the filter main body being covered with an electric conductive member, one side edge portion of the electric conductive member being folded into the electric conductive surface of the electromagnetic wave shielding layer (the back surface of the figure), the other side edge portion of the electric conductive member being folded into the front-most surface of the filter main body, and a transparent gel adhesive layer being layered on the back surface of the filter main body with the one side edge portion of the electric conductive member in an intercalated state can be given as an example. Further, an optical filter for display (Fig. 4) provided with a constitution comprised of the provision of a filter main body, wherein a low visible light reflection layer is layered on the front surface of a transparent base body, while a moisture-permeation prevention layer, a near-infrared radiation cut layer, an image quality correction layer, and an electromagnetic wave shielding layer are sequentially layered on the back surface of the transparent base body, the side surface portion of the filter main body being covered with an electric conductive member, one side edge portion of the electric conductive member being folded into the electric conductive surface of the electromagnetic wave shielding layer (the back surface of the figure), the other side edge portion of the electric conductive member being folded into the front-most surface of the filter main body, and a transparent gel adhesive layer being layered on the back surface of the filter main body with the one side edge portion of the electric conductive member in an intercalated state, and the like, can also be given as an example.

In addition, an optical filter for display, which is an optical filter to be pasted onto the front side of a display panel, provided with at least an electromagnetic wave shielding layer on one side or both sides of a transparent base body, wherein the electromagnetic wave shielding layer is constituted by an electromagnetic wave shielding film or sheet, wherein, on the inner side portion that leaves out a peripheral edge portion of a film or sheet comprised of an electric conductive material, a mesh portion comprised of a stripe portion connected to the peripheral edge portion is provided, a transparent gel adhesive layer is layered on the mesh portion, and the peripheral edge portion of the electromagnetic wave shielding film or sheet is exposed, can be cited as another example.

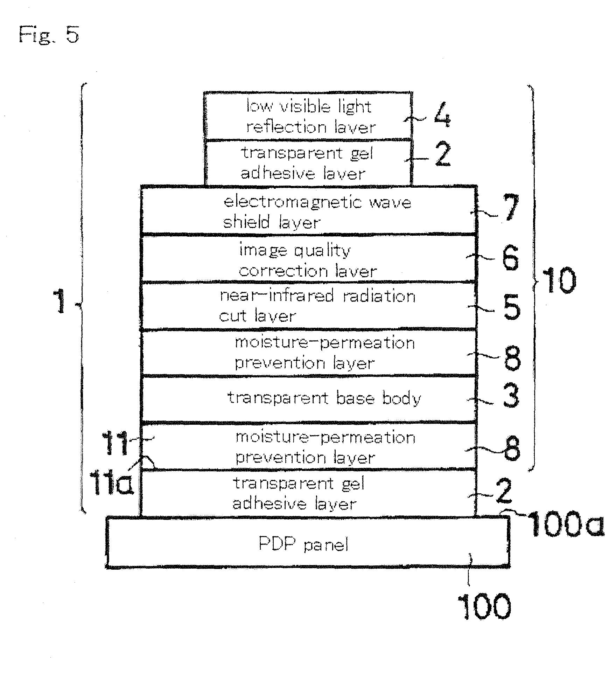

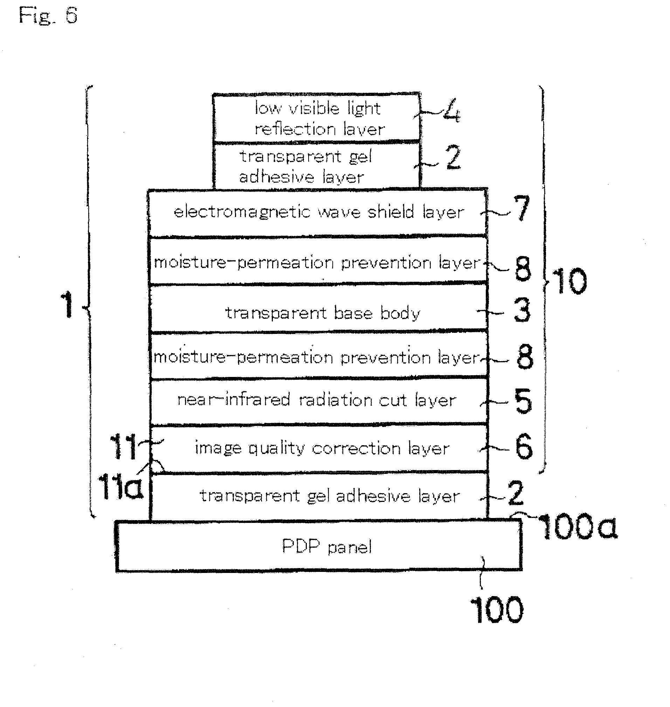

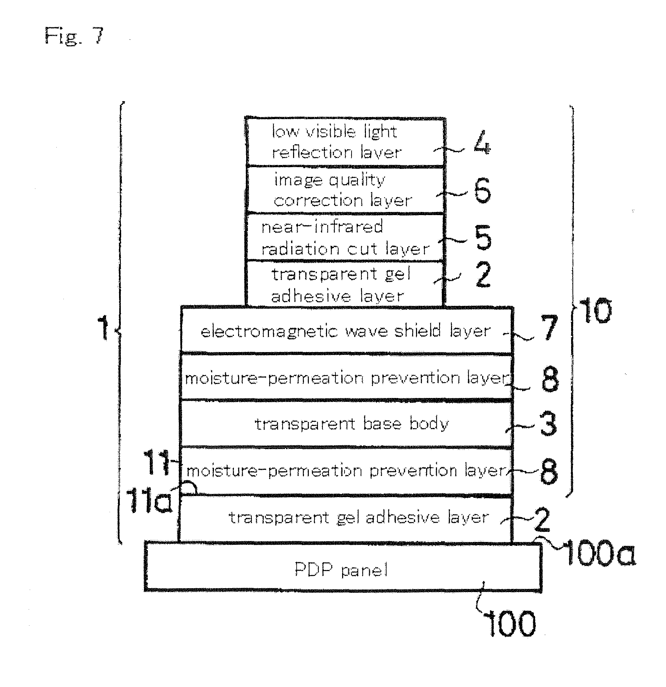

Specifically, an optical filter for display (Fig. 5), which is an optical filter for display comprised of the provision of a filter main body, wherein a moisture-permeation prevention layer, a near-infrared radiation cut layer, an image quality correction layer, an electromagnetic wave shielding layer, a transparent gel adhesive layer, and a low visible light reflection layer are sequentially layered on the front surface of a transparent base body, while a moisture-permeation prevention layer is layered on the back surface of the transparent base body, and a transparent gel adhesive layer layered on the back surface of the moisture-permeation prevention layer, provided with a constitution wherein the electromagnetic wave shielding layer is constituted by an electromagnetic wave shielding film or sheet, wherein, on the inner side portion that leaves out a peripheral edge portion of a film or sheet comprised of an electric conductive material, a mesh portion comprised of a stripe portion connected to the peripheral edge portion is formed, a transparent gel adhesive layer being layered on the mesh portion, and the peripheral edge portion of the electromagnetic wave shielding film or sheet being exposed to the front side can be given as example. Further, an optical filter for display (Fig. 6), which is an optical filter for display comprised of the provision of a filter main body, wherein a moisture-permeation prevention layer, an electromagnetic wave shielding layer, a transparent gel adhesive layer, and a low visible light reflection layer are sequentially layered on the front surface of a transparent base body, and a moisture-permeation prevention layer, a near-infrared radiation cut layer, and an image quality correction layer are sequentially layered on the back surface of the transparent base body, and a transparent gel adhesive layer layered on the back surface of the image quality correction layer, provided with a constitution wherein the electromagnetic wave shielding layer is constituted by an electromagnetic wave shielding film or sheet, wherein, on the inner side portion that leaves out a peripheral edge portion of a film or sheet comprised of an electric conductive material, a mesh portion comprised of a stripe portion connected to the peripheral edge portion is formed, a transparent gel adhesive layer being layered on the mesh portion, and the peripheral edge portion of the electromagnetic wave shielding film or sheet being exposed to the front side can also be given as an example. Further more, an optical filter for display (Fig. 7), which is an optical filter for display comprised of the provision of a filter main body, wherein a moisture-permeation prevention layer, an electromagnetic wave shielding layer, a transparent gel adhesive layer, a near-infrared radiation cut layer, an image quality correction layer, a low visible light reflection layer are sequentially layered on the front surface of a transparent base body, and a moisture-permeation prevention layer is layered on the back surface of the transparent base body, a transparent gel adhesive layer being layered on the back surface of the image quality correction layer, provided with a constitution wherein the electromagnetic wave shielding layer is constituted by an electromagnetic wave shielding film or sheet, wherein, on the inner side portion that leaves out a peripheral edge portion of a film or sheet comprised of an electric conductive material, a mesh portion comprised of a stripe portion connected to the peripheral edge portion is formed, a transparent gel adhesive layer being layered on the mesh portion, and the peripheral edge portion of the electromagnetic wave shielding film or sheet being exposed to the front side, and the like, can also be given as an example.

In addition, the present invention proposes a display surface structure provided with a constitution comprised of any among the above-mentioned optical filters for display layered on the front surface of the display panel or on the front surface of the layer that is layered on the front-most side of the display panel.
Among which, a structure wherein the layer formed on the front surface of the display panel is provided, on the inner side portion that leaves out a peripheral edge portion of a film or sheet comprised of an electric conductive material, with a mesh portion comprised of a stripe portion connected to the peripheral edge portion, the above-mentioned optical filter for display being layered on the front surface of the mesh portion, and the peripheral edge portion of the electromagnetic wave shielding film being exposed to the front side, is preferred.

Since the optical filter for display and display surface structure described above are provided with a prescribed transparent gel adhesive layer, they can be pasted directly onto the front side of a display panel, without having to coat with a bonding agent or adhesive agent separately; furthermore, since the transparent gel adhesive layer is provided with a combination of excellent damping property, bonding property, separation property, flexibility, and the like, it has excellent impact resistance that protects the display panel from external impacts, they can be easily pasted without requiring high pressure or high temperature. Even if the surface to paste the optical filter onto presents asperities, such as the mesh surface of an electromagnetic wave shielding film, they can be pasted evenly and neatly without giving rise to bubbles as with laminates in conventional film layering, for example. Furthermore, at the same time, they can also be detached easily. In particular, the surface temperature during light emission reaches approximately 60°C to approximately 90°C in a PDP, leading to a temperature difference between the room temperature during a general household environment use and the panel surface. Therefore, heat resistance and durability in cold-heat cycle are also required for the adhesive agent that pastes the filter directly onto the PDP panel; in contrast to adhesive agents used in prior art, almost none of which satisfying the antagonistic properties of bonding property and detachability from the panel under such severe conditions, the transparent gel adhesive agent of the present invention can satisfy such antagonistic properties simultaneously.

In the following, more detailed descriptions will be given based on figures.

An optical filter for display 1 is an optical filter that can be pasted directly onto a front surface 100a of a display panel 100 provided with an operational control circuit on the reverse side, or onto a front surface 101 a of a layer 101 layered on the front surface 100a, without having to coat a bonding agent or an adhesive agent separately, provided with a filter main body 10 comprised of a plurality of layers provided with various functions, and can be constituted by layering a transparent gel adhesive layer 2 onto the back surface of the filter main body 10 (the surface on the PDP side, in other words, the surface on the pasting side), that is to say, onto a back surface 11 a of a layer 11 on the back-most surface side (PDP side, in other words, the pasting side) of the filter main body 10 (Fig. 1 to Fig. 7).

### (Filter Main Body)

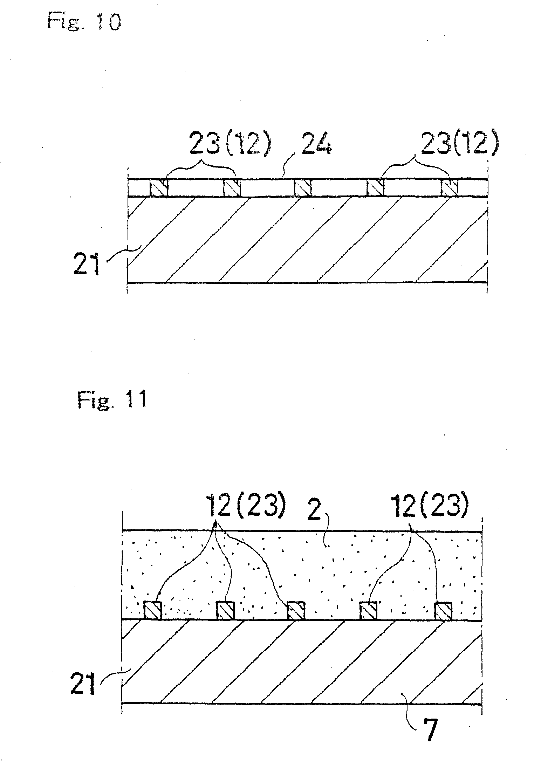

The layering structure of the filter main body 10 is not limited in particular. For instance, it can be constituted by layering any layer among a low visible light reflection layer 4, a near-infrared radiation cut layer 5, an image quality correction layer 6, an electromagnetic wave shielding layer 7, and a moisture-permeation prevention layer 8, or a plurality of layers comprised of the combination of two or more types chosen from these layers, on one side or both sides of a transparent base body 3 comprised of a transparent film or sheet (specific layering structures will be described below).
Here, the transparent gel adhesive layer 2 is provided with a property which may allow for an even layering, without giving rise to bubbles, even if the surface onto which this layer 2 is to be layered is an irregular surface provided with asperities, by flexibly fitting to the asperities and absorbing the asperities, such that, even if the back surface of the filter main body 10, in other words, the back surface 11a of the layer 11 on the back-most surface side of the filter main body 10, that is to say, in case where the layered surface 11a of the filter main body 10 onto which the transparent gel adhesive layer 2 is to be layered is a surface provided with asperities, for instance, as shown in Fig. 11, in such cases as a surface that is an asperity-patterned surface comprised of a stripe portion 12 whose protuberance height is 1 µm to 1 mm, the effects of the present invention are all the more exerted. In this case, the stripe portion means the elongated salient portion extending as a string when observed flat. Specifically, it is mesh portion 23 comprised of a grid-shaped stripe portion as in the mesh portion 23 of the electromagnetic wave shielding layer 7 described below, or the like (Fig. 3 and Fig. 4, Fig. 8 to Fig. 10).

More specifically, for instance, as shown in Fig. 1, an optical filter for display 1 can be constituted by layering sequentially to the front surface side a near-infrared radiation cut layer 5, an image quality correction layer 6, and a low visible light reflection layer 4 on the front surface of a transparent base body 3, while layering a moisture-permeation prevention layer 8 on the back surface of the transparent base body 3 to constitute a filter main body 10, and layering a transparent gel adhesive layer 2 on the back surface of the filter main body 10, that is to say, on the back surface of the moisture-permeation prevention layer 8.
As shown in Fig. 2, an optical filter for display 1 can be constituted by layering a low visible light reflection layer 4 on the front surface of the transparent base body 3, while layering sequentially to the back surface side a moisture-permeation prevention layer 8, a near-infrared radiation cut layer 5, and an image quality correction layer 6 on the back surface of the transparent base body 3 to constitute a filter main body 10, and layering transparent gel adhesive layer 2 on the back surface of the filter main body 10, that is, on the back surface of the image quality correction layer 6.

As shown in Fig. 3, an optical filter for display 1 can be constituted by layering sequentially to the front surface side a near-infrared radiation cut layer 5, an image quality correction layer 6, and a low visible light reflection layer 4 on the front surface of the transparent base body 3, while layering sequentially to the back surface side a moisture-permeation prevention layer 8 and an electromagnetic wave shielding layer 7 on the back surface of the transparent base body 3 to construct the filter main body 10, covering with an electric conductive adhesive tape 9 the side surface of the filter main body 10, that is to say, the layered side surface comprised of each layer being layered, folding one side edge portion of the electric conductive adhesive tape 9 from the edge of the electromagnetic wave shielding layer 7 into the back surface (electric conductive surface) to connect it with the electromagnetic wave shielding layer 7, folding the other side edge portion of the electric conductive adhesive tape 9 from the edge of the low visible light reflection layer 4 into the front surface, and layering a transparent gel adhesive layer 2 onto the back surface of the electromagnetic wave shielding layer 7, with the one side edge portion of the electric conductive adhesive tape 9 in intercalated state.

As shown in Fig. 4, an optical filter for display 1 can be constituted by layering a low visible light reflection layer 4 on the front surface of the transparent base body 3, while layering sequentially to the back surface side a moisture-permeation prevention layer 8, a near-infrared radiation cut layer 5, an image quality correction layer 6, and an electromagnetic wave shielding layer 7 on the back surface of the transparent base body 3 to construct the filter main body 10, covering with an electric conductive adhesive tape 9 the side surface of the filter main body 10, that is to say, the layered side surface comprised of each layer being layered, folding one side edge portion of the electric conductive adhesive tape 9 from the edge of the electromagnetic wave shielding layer 7 into the back surface (electric conductive surface) to connect it with the electromagnetic wave shielding layer 7, folding the other side edge portion of the electric conductive adhesive tape 9 from the edge of the low visible light reflection layer 4 into the front surface, and layering a transparent gel adhesive layer 2 onto the back surface of the electromagnetic wave shielding layer 7, with the one side edge portion of the electric conductive adhesive tape 9 in an intercalated state.

In addition, as shown in Fig. 5, an optical filter for display 1 can be constituted by layering sequentially to the front surface side a moisture-permeation prevention layer 8, a near-infrared radiation cut layer 5, an image quality correction layer 6, an electromagnetic wave shielding layer 7, a transparent gel adhesive layer 2, and a low visible light reflection layer 4 on the front surface of the transparent base body 3, while layering a moisture-permeation prevention layer 8 on the back surface of the transparent base body 3 to construct the filter main body 10, and layering a transparent gel adhesive layer 2 onto the back surface of the filter main body 10, that is to say, onto the back surface of the moisture-permeation prevention layer 8.

In addition, as shown in Fig. 6, an optical filter for display 1 can be constituted by layering sequentially to the front surface side a moisture-permeation prevention layer 8, an electromagnetic wave shielding layer 7, a transparent gel adhesive layer 2, and a low visible light reflection layer 4 on the front surface of the transparent base body 3, while layering sequentially to the back surface side a moisture-permeation prevention layer 8, a near-infrared radiation cut layer 5, and an image quality correction layer 6 on the back surface of the transparent base body 3 to construct the filter main body 10, and layering a transparent gel adhesive layer 2 onto the back surface of the filter main body 10, that is to say, onto the back surface of the image quality correction layer 6.

As shown in Fig. 7, an optical filter for display 1 can be constituted by layering sequentially to the front surface side a moisture-permeation prevention layer 8, an electromagnetic wave shielding layer 7, a transparent gel adhesive layer 2, a near-infrared radiation cut layer 5, an image quality correction layer 6, and a low visible light reflection layer 4 on the front surface of the transparent base body 3, while layering a moisture-permeation prevention layer 8 on the back surface of the transparent base body 3 to construct the filter main body 10, and layering a transparent gel adhesive layer 2 onto the back surface of the filter main body 10, that is to say, onto the back surface of the moisture-permeation prevention layer 8.

### (Panel Pasted Surface)

The pasted surface where the optical filter for display is to be pasted, in other words, the pasted surface where the transparent gel adhesive layer 2 is to be pasted, as described above, may be the front surface 100a of the display panel 100 (Fig. 3 to Fig. 7) or the front surface 101 a of the layer 101 layered on the front surface 100a (Fig. 1 and Fig. 2). The transparent gel adhesive layer 2 is provided with a property that allows for an even pasting, without giving rise to bubbles, even if asperities are present, by flexibly fitting to the asperities and absorbing the asperities, such that, the effect of the present invention can be all the more appreciated in a case where the pasted surface is provided with asperities, for instance, in a case where it is an asperity-patterned surface comprised of a stripe portion with a protuberance height of 1 µm to 1 mm. Specifically, the effect of the present invention can be all the more appreciated, for instance, as in Fig. 1 and Fig. 2, in a case where the front surface 101 a of the electromagnetic wave shielding layer 7 (101) serves as the pasted surface, in a case where the electromagnetic wave shielding layer 7 is constituted from an electromagnetic wave shielding film or sheet 20, the mesh portion 24 thereof serving as the pasted surface, as described below, and the like.

In the following, the function, constitution, formation method, and the like will be described for each layer described above.

### (Transparent Base Body)

Although any among glass and transparent resin can be used as the transparent base body 3 of the optical filter for PDP, the use of a transparent resin is preferred from the point of lightweightness and the like.
The transparent resin is not limited in particular, and it is sufficient if it is substantially transparent and if absorption and scattering of light are not high. Specifically, polyolefin series resin, polyester series resin, polycarbonate series resin, poly(meth)acrylate ester series resin, polystyrene, polyvinyl chloride, polyvinyl acetate, polyarylate resin, polyethersulphone resin, and the like can be cited. Among these, in particular, non-crystalline polyolefin series resin, polyester series resin, polycarbonate series resin, poly(meth)acrylate ester series resin, polyarylate resin, and polyethersulphone resin are preferred, polycarbonate resin being particularly preferred from the point of having excellent impact resistance.
Well-known additives, for instance, oxidation inhibitors of the phenol series, the phosphorus series, and the like, flame retardants, such as from the halogen series and the phosphorus acid series, heat-resistant anti-aging agent, ultraviolet light absorbing agent, smoothing agent, electrostatic preventing agent, and the like, can be mixed into the above-mentioned resins.
The transparent base body can be formed from the above-mentioned resin by a well-known forming method, such as T die forming, calendar forming, press forming, or the method of dissolving in an organic solvent for casting, and the like.
As far as the thickness of the transparent base body is concerned, it is preferred to select suitably in a range of 10 µm to 5 mm according to the objective, but is not limited in particular. From the points of sustaining impact resistance, smoothness of the visualization surface, and the like, rather than thin films, those with a thickness of about 100 µm to 3 mm are preferred.
Note that, if the thickness of the transparent base body is thin, that is to say, in case a film is used as the transparent base body, the film may be unstretched or stretched. In addition, the transparent base body may be one comprised of a film layered with another plastic base body.
The surface of the transparent base body may have been subjected to surface treatment by a well-known prior art method, such as corona discharge treatment, flame treatment, plasma treatment, ultraviolet light treatment, glow discharge treatment, rough-surfacing treatment, and chemical treatment, or to coating, such as a primer on one surface or on both surfaces.

### (Near-infrared Radiation Cut Layer)

The near-infrared radiation cut layer is a layer provided with the activity of absorbing light in the near-infrared region (wavelength of 700 nm to 1200 nm).
It suffices that the near-infrared radiation cut layer satisfies the aforementioned to-be-fulfilled properties and can be formed, for instance, by coating a near-infrared radiation absorption agent coating solution.
A near-infrared radiation absorption agent dispersed or dissolved in an organic solvent with added binder resin, or a near-infrared radiation absorption agent added to any of, a hard coat agent containing for instance, a monofunctional or a multifunctional acrylate, such as polyurethane acrylate and epoxy acrylate, a photo-polymerization starter and organic solvent (containing isocyanate series, polyurethane series, polyester series, polyethyleneimine series, polybutadiene series or alkyltitanate series, and the like), an anchor coat agent, a bonding agent, or the like, or to a mixed component comprised of the combination of two or more types thereof, or the like, can be given as examples of near-infrared radiation absorption coating solution.
Examples of near-infrared radiation absorption agents include those comprised of the combination of at least two types chosen from the organic substances, nitroso compounds and metal complex salts thereof, compounds of the cyanine series, compounds of the squarylium series, compounds of the thionyl nickel complex salt series, compounds of the phthalocyanine series, compounds of the naphthalocyanine series, compounds of the triarylmethane series, compounds of the immonium series, compounds of the diimmonium series, compounds of the naphthoquinone series, compounds of the anthraquinone series, or amine compounds, compounds of the aminium salt series, or the inorganic compounds carbon black, indium tin oxide, antimony tin oxide, oxides of metals belonging to the 4A, 5A, or 6A families in the periodic table, or carbides, or borides and the like. Among them, using near-infrared radiation absorption agent selected from compounds of the immonium series, compounds of the diimmonium series, or compounds of the aminium salt series for at least one type is preferred. Among these, the combined use of at least one type selected from a near-infrared radiation absorption agent, other than a compound of the immonium series, a compound of the diimmonium series, and a compound of the aminium salt series, is preferred.
The method of coating the layered surface directly with the near-infrared radiation absorption agent coating solution, the method of coating a transparent film with the near-infrared radiation absorption agent coating solution then making an intimate contact with the layered surface via an adhesive agent, the method of forming by kneading a near-infrared radiation absorption agent into the resin that constitutes the layered surface, the method of kneading a near-infrared radiation absorption agent into a flexible adhesive agent described below (transparent gel adhesive agent of the present invention) having the function of attenuating impacts from the exterior, and other methods, can be adopted as methods for layering a near-infrared radiation cut layer.

### (Image Quality Correction Layer)

The image quality correction layer is a layer provided with the function of cutting the neon light emission that accompanies the light emission from a PDP and the function of balancing the wavelength distribution of the transmitted white light by adjusting the respective transmittance of the blue/green/red light so that the viewer can see the best screen.
The image quality correction layer can be formed, for instance, by coating a colorant coat solution in which colorants whose type and quantities have been selected to satisfy the aforementioned functions have been mixed.
Examples of colorant coat solutions include those wherein each colorant has been dispersed or dissolved in an organic solvent and a binder resin has been added, or those wherein colorants have been added to any of a hard coat agent containing, for instance, a monofunctional or a multifunctional acrylate, such as polyurethane acrylate and epoxy acrylate, a photo-polymerization starter, and an organic solvent (including isocyanate series, polyurethane series, polyester series, polyethyleneimine series, polybutadiene series, or alkyltitanate series, and the like), an anchor coat agent, an adhesive, and the like, or a mixture component comprised of the combination of two or more thereof. Methods for layering the image quality correction layer include the method of coating a layered surface directly with the color coating solution, the method of coating a transparent film with the color coating solution, then intimately attaching it to a layered surface via an adhesive agent, the method of forming by kneading the colorant into the resin that constitutes the layered surface, the method of kneading the colorant into a flexible adhesive agent (the transparent gel adhesive agent of the present invention) having the function of attenuating impacts from the exterior as described below, and other methods can be adopted.

### (Low Visible Light Reflection Layer)

The low visible light reflection layer is a layer provided with the function of limiting the surface light reflection to improve the transmittance of the filter.
Example of methods for layering a low visible light reflection layer include the method of layering an inorganic substance, such as a metal oxide, fluoride, silicide, boride, carbide, nitride, or sulfide, as a monolayer or a multilayer on one of the surfaces of a transparent filter by a method, such as vacuum deposition, sputtering, ion plating, and ion beam assist; the method of layering a resin with a different refractive index, such as an acrylic resin, a fluorine resin, or the like, as a monolayer or a multilayer; the method of forming a so-called low reflection layer, which is an antiglare-treated film on the back surface of which an adhesive treatment has been performed; and the like.
The resins cited as examples of filter base body can be used suitably as resin sheet or film serving as the base for the low visible light reflection layer.

### (Electromagnetic Wave Shielding Layer)

The electromagnetic wave shielding layer is a layer provided with the function of substantially cutting the electromagnetic wave that radiates from the display screen concomitantly with the light emission activity of the PDP. It suffices that the electromagnetic wave shielding layer possesses the aforementioned properties that an electromagnetic wave shielding layer should fulfill, and the layering method or the manufacturing method thereof is not restricted. The method of pasting together a mesh made of electric conductive fiber, the method of vapor depositing an electric conductive substance, such as a metal or a metal oxide, the method of layering a thin metallic film on the surface of a transparent plastic film face and forming the mesh portion by etching the layering surface, and the like can be cited.

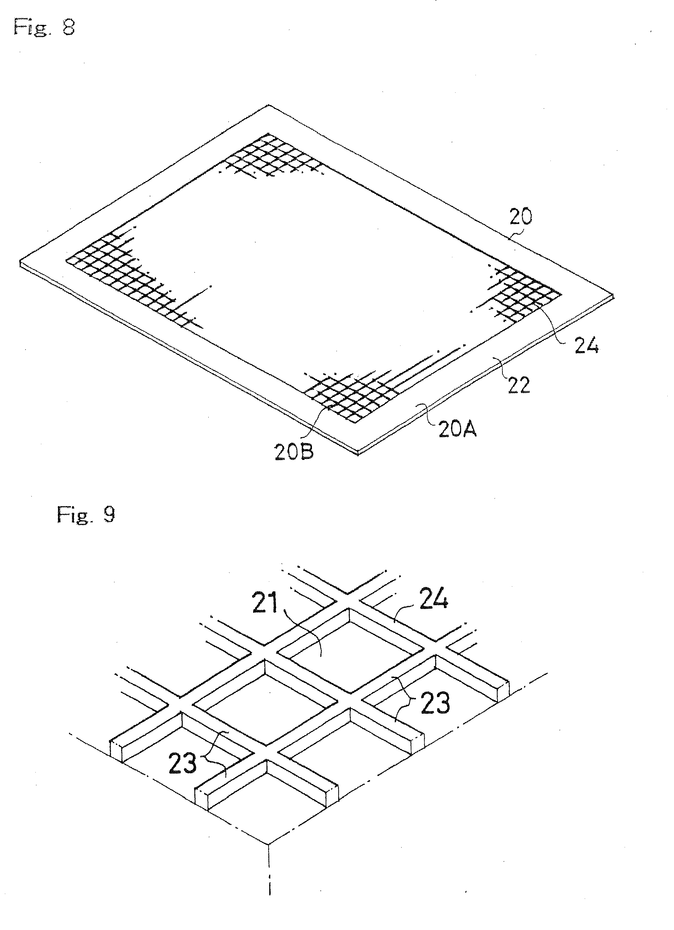

Among them, layering an electromagnetic wave shielding film or sheet 20 provided with a mesh portion 24 comprised of a plurality of stripe portion 23 crossing vertically and horizontally, resulting from a thin metallic film 22 layered on the surface of a transparent plastic film or sheet 21, which layering surface has been etched, as shown in Fig. 9 and Fig. 10, is preferred from the point of being advantageous on both aspects of electromagnetic wave shielding ability and optical transparency.

In such a mesh-type electromagnetic wave shielding film or sheet 20, it is preferred that the transparent plastic film or sheet 21 is transparent and has easy bonding capability; resins indicated as examples of the transparent base body described above serving as the base body of the filter can be used preferably. Among them, polyethylene terephthalate (PET) is preferred.

The thin metallic film 22 can be formed from a metal, such as copper, aluminum, and nickel, or from an electric conductive substance, such as a metal oxide. The thickness of the thin metallic film 22 (in this case, the same as the height of the protuberance of the stripe portion 23) is different depending on the required physical property, application, and the like; 10 nm to 100 µm, in particular 3 µm to 18 µm, among which, in particular 7 µm to 12 µm is preferred.
The mesh portion 24 forms a grid-shaped geometric figure; for the line width constituting this geometric figure, 25 µm or less, in particular 5 µm to 15 µm, is preferred; for the line interval, 250 µm or more, in particular 260 µm to 300 µm, is preferred; and for the line thickness, 18 µm or less, in particular 3 µm to 18 µm, among which, in particular 5 µm to 16 µm, and among which, in particular 7 µm to 12 µm, is preferred. In addition, a surface resistivity of 1 Ω/cm² (also referred to as 1 Ω/sq) or less, in particular 0.1 Ω/cm² or less, among which, in particular 0.01 to 0.1 Ω/cm², is preferred. Note that, when a mesh-type electromagnetic wave shielding film or sheet is used, as it sometimes gives rise to light interference fringes, suitably setting an optimal mesh bias angle to various PDPis desired.
As for the method for forming the mesh portion 24, for instance, the method of transferring or vapor-depositing an electric conductive substance, such as a metal and a metal oxide, on the transparent plastic film or sheet 21 can be adopted. However, it is not limited to these.
As for the transfer method, the transfer can be, for instance, via a UV-curing-type (ultraviolet light-curing-type) acrylic bonding agent and the like.
When using an electromagnetic wave shielding film or sheet 20 of the vapor deposition type comprised of a vapor-deposited electric conductive substance, such as a metal and a metal oxide, the electric conductive substance to be vapor-deposited on the transparent resin film or sheet 21 is vapor-deposited with the purpose of shielding the electromagnetic wave released from the PDP, and any among them is adequate, as long as it transmits 70% or more of the 400 to 700 nm visible light region, and the surface-specific resistance value is 5 Ω/cm² or less. Preferably, metal oxide, such as tin oxide, indium tin oxide (or hereinafter referred to as ITO), and antimony tin oxide (or hereinafter referred to as ATO), or a laminated body comprised of alternately layered metal oxide and metal, as they allow the surface-specific resistance to be decreased, are more preferred. Tin oxide, ITO, ATO, and the like may be cited as metal oxides, while silver and silver-palladium alloy are common as metals, and in general, those providing with a metal oxide layer and comprising on the order of 3 to 11 layers that have been layered are preferred. A conventional method can be adopted as the vapor deposition method, such as, the vacuum deposition method, the sputtering method, the ion-plating method, the chemical vapor deposition method, and the plasma chemical vapor deposition method. The extent of the vacuum when vapor-depositing is preferably 1×10⁻⁴ Torr or less when carried out by vacuum deposition and 1×10⁻² Torr or less with the sputtering method. In addition, when carried out by the sputtering method, the argon gas or a mixed oxygen/argon gas is used as the sputtering gas. Furthermore, in addition, when vapor-depositing, it is preferred to treat the transparent resin film or sheet 21 by heat to lower the resistance. The conditions thereof are different depending on the materials of transparent resin film or sheet 21 used; however, it is adequate to take as the upper limit a temperature that is lower by 5°C to 11°C than the temperature where heat deformation starts.

To make it function as an electromagnetic wave shielding layer, it is necessary to ground the electricity that accumulates on the electromagnetic wave shielding layer, requiring a portion that connects the ground to be exposed on the front side (that is to say, the viewing side) as a grounding electrode. Therefore, in the case where an electromagnetic wave shielding layer is to be layered on the front surface 100a of the display panel 100, or in the case where an electromagnetic wave shielding layer is to be layered inside the filter main body 10, a constitution may be adopted, for instance, as in Fig. 3 and Fig. 4, wherein one side edge portion of an electric conductive tape serving as a grounding electrode is connected to the electric conductive surface (back surface of the figure) of the electromagnetic wave shielding film or sheet 20, and the other side edge portion is disposed on the front-most surface to expose the grounding electrode on the front side; however, the structure becomes complicated.
Therefore, it is preferred to constitute the display surface structure by constituting an electromagnetic wave shielding layer from an electromagnetic wave shielding film or sheet 20 comprised of a mesh portion 24 formed on the inner portion 20B surrounded by a peripheral edge portion 20A that frames a film or sheet composed of an electric conductive material comprising a plurality of stripe portion 23 disposed in a grid shape connected to the peripheral edge portion 20A, layering an optical filter for display 1 on the front surface of this mesh portion 24 via a transparent gel adhesive layer 2, and exposing the peripheral edge portion 20A to the front side, as shown in Fig. 1, Fig. 2, Fig. 5, Fig. 6, and Fig. 7. With such a constitution, the ground can be connected to the peripheral edge portion 20A from the front side, which allows the display surface structure to be further simplified, and thus the manufacturing cost can be further suppressed.

### (Moisture-Permeation Prevention Layer)

The moisture-permeation prevention layer is a layer provided with the function of having an excellent barrier property, which substantially cuts the passage of water vapor and the like, and further having excellent transparency.
It suffices that the moisture-permeation prevention layer possesses the properties that a moisture-permeation prevention layer should fulfill, and the layering method or the manufacturing method thereof is not restricted. For instance, a transparent barrier film comprising an aluminum oxide membrane provided on at least one face of a transparent plastic film can be adopted. In so doing, an aluminum oxide membrane can be formed, in the vacuum deposition method, the sputtering method, the ion beam vapor deposition method, and the like, by suitably controlling the conditions thereof. The vacuum deposition method is preferred, as it is the easiest and productivity is also good. In this vacuum deposition method, the membrane can be manufactured by introducing oxygen gas under specific conditions at the time of vacuum deposition. In general, if the amount of oxygen gas supplied is less than 2.6 (×10⁻⁴) in the relationship between the amount of oxygen gas supplied and the vapor deposition speed, the total light transmittance tends to decrease, deteriorating transparency, and if the amount of oxygen gas supplied is greater than 3.7 (×10⁻⁴) in the relationship between the amount of oxygen gas supplied and the vapor deposition speed, transparency is satisfactory, but oxygen permeability and water vapor permeability tend to increase, deteriorating the barrier property.
Polyester film, polypropylene film, polyethylene film, polycarbonate film, polyamide film, polyacetal film, polyimide film, vinylidene polychloride film, polyethersulfone film, polyacrylate ester film, polymethacrylate ester film, polyvinyl alcohol film, and polystyrene film can be used as the base film for the moisture-permeation prevention layer. The thickness of the film is not limited in particular; from the viewpoint of plasticity, thermal properties, mechanical properties, and the like, on the order of 2 µm to 250 µm, in particular 9µm to 125 µm, is preferred.

Plasma may be generated when introducing the oxygen gas by discharging the oxygen gas with direct current, alternating current, radio frequency, microwave, and the like. When discharging to generate plasma, the oxygen gas becomes more activated, improving the efficiency of reaction between aluminum and oxygen, such that it becomes easier to produce a more compact and better quality aluminum oxide membrane, allowing the desired effect to be obtained with a thinner vapor deposition membrane thickness. When discharging at the time of oxygen gas introduction, the introduction may be the introduction of oxygen gas only, or a small amount of argon gas may be mixed into the oxygen gas, which is then introduced. When an argon gas is mixed, compared to when oxygen gas only is introduced, a stronger plasma is generated, and the oxygen gas becomes more activated, such that it is easier to produce a more compact and better quality aluminum oxide membrane, allowing the desired effect to be obtained with a thinner vapor deposition membrane thickness. However, if the proportion of argon gas increases excessively, the aluminum oxide reaches the film imperfectly, and at the same time, the vacuum decreases; therefore, the preferred mixing proportion of oxygen gas and argon gas is 95:5 to 70:30 in terms of capacity.
Even if the aluminum oxide membrane has as thin a thickness as 30 Å to 100 Å as measured by x-ray fluorescence, a product with excellent oxygen barrier property, water vapor barrier property, and transparency can be obtained. If the thickness of the aluminum oxide membrane is thinner than 30 Å, the barrier property decreases, and if thicker than 100 Å, productivity decreases, such that an aluminum oxide membrane thickness of 30 Å to 100 Å range is preferred; in particular, an aluminum oxide membrane with a thickness of 35 Å to 50 Å is preferred, since it allows a product which is stable and having excellent oxygen barrier property, water vapor barrier property, and transparency to be obtained.

The constitution, function, and formation method have been explained above for each of the layers, i.e., a transparent base body, a low visible light reflection layer, a near-infrared radiation cut layer, an image quality correction layer, an electromagnetic wave shielding layer, and a moisture-permeation prevention layer; however, each layer is not limited to the contents described above and can be formed arbitrarily, as long as it satisfies the properties that each layer should fulfill. In addition, the layering sequence is also arbitrary, and further layering a layer provided with another function is also arbitrary.

### (Transparent Gel Adhesive Layer)

The transparent gel adhesive layer can be formed from the transparent gel adhesive agent described above. The transparent gel adhesive layer can be formed by coating a layered surface with a transparent gel adhesive agent in a form that makes it easier to coat (liquid, viscous fluid, and the like), it is preferably formed by layering a transparent gel adhesive sheet comprising a transparent gel adhesive agent that has been sheet-formed into a sheet shape provided with a uniform thickness.

Here, a transparent gel adhesive sheet obtained by preparing a sol composition, containing a base polymer, a cross-linking monomer, a photo-initiator, a plasticizer, and an inorganic fine particle, sheet-forming this sol composition and then photo-cross-linking to gel the sol can be cited as one preferred example of transparent gel adhesive sheet.
More specifically, it is a gel adhesive sheet obtained by preparing a sol composition, containing a copolymer of the (meth)acrylate ester series, a cross-linking monomer, an ultraviolet light reactive photo-initiator, a plasticizer, and an inorganic fine particle, sheet-forming this sol composition by coating in between the transparent release film at a suitable thickness, then cross-linking by ultraviolet irradiation through the release film using a high-voltage mercury lamp or the like. When irradiating with ultraviolet light, the cross-linking density and the holding strength can be adjusted by adjusting the amount of irradiation and the irradiation time according to the amounts of the monomer and photo-initiator.
The thickness of the transparent gel adhesive sheet is preferably adjusted with respect to the target objects to paste together, the damping power sought, and the like; in general, on the order of 0.5 mm to 2.0 mm, in particular 0.5 mm to 1.0 mm, is preferred.

By having such a transparent gel adhesive sheet sandwiched between release sheets or film materials to constitute a layering sheet, it suffices to peel one of the release sheets or films and stack the adhesive surface of the gel adhesive sheet onto a target body (for instance, substrate), then peel the other release sheet or film and stack the adhesive surface of the transparent gel adhesive sheet onto a target body (for instance, surface material) to allow the target bodies to be pasted together easily, with a given thickness in between (for instance, between a substrate and a surface material).
Furthermore, as the above-mentioned transparent gel adhesive sheet is provided with the desired adhesive strength at room temperature, it suffices to sequentially stack, for instance, a substrate, a transparent gel adhesive sheet, and a surface material, pass them between nip rolls (rubber rolls), and apply a light pressure at room temperature (without heating) to allow them to be pasted together.
Since the desired holding strength is provided, as described above, even when pasting different types of material together, the difference in the behavior of a member can be absorbed, allowing transparency to be maintained satisfactorily, without occurrence of warping, peeling, cracking, and the like after layering, and at the same time allowing the laminated body to be provided with an excellent damping effect.

If a transparent gel adhesive layer comprising such a transparent gel adhesive agent and transparent gel adhesive sheet serves as an intermediate layer of a laminated body, even if the surface where the transparent gel adhesive layer is to be layered or the surface of the partner side that is to be pasted together is not smooth, or even if the materials of both parties to be pasted together are different, pasting is possible by absorbing the difference in the behavior of each material and the asperities.

Regarding the thickness of the transparent gel adhesive layer, in case the surface where a transparent gel adhesive layer is to be layered (the aforementioned pasted surface or layered surface) is an asperity-patterned surface comprising a stripe portion having a protuberance height of 1 µm to 1 mm, the transparent gel adhesive layer is preferably formed with a thickness of 3 times or more, in particular, a thickness of 5 times or more with respect to the protuberance height. If formed with this thickness, the asperities of the asperity-patterned surface can be absorbed to finish the surface neatly and smoothly.

### Examples

In the following, further details will be examined using examples and comparative examples.

First, Examples 1 to 4 and Comparative Examples 1 to 4 were used for comparative examination of the compositions and physical properties of transparent gel adhesive agents.

### (Example 1)

To 100 weight parts of acrylate ester copolymer were added 0.3 weight parts of product name Irgacure 500 manufactured by Ciba Specialty Chemicals as the photo-initiator and 0.3 weight parts of product name Viscoat V260 (1,9-nonanedioldiacrylate) manufactured by Osaka Organic Chemical Industry as a cross-linking monomer to obtain an ultraviolet photo-cross-linking composition. The composition of the acrylic acid ester copolymer used was 78.4 weight percent of n-butyl acrylate, 19.6 weight percent of 2-ethylhexyl acrylate, and 2.0 weight percent of acrylic acid that have been copolymerized, and the Tg was -40°C, and the melt viscosity at 130°C was 250,000 (mPa·s).

Into the above-mentioned ultraviolet photo-cross-linking composition were mixed 20 weight percent of diisodecylphthalate (DIDP) as a plasticizer and 2 weight percent of product name "Aerosil 300" manufactured by Nippon Aerosil as silica ultrafine particle with a primary average particle diameter of 7 nm, which were melt-stirred to obtain a sol composition.

The sol composition was sandwiched between release PETs, with thicknesses of 75 µm and 100 µm, hot-melt formed into a sheet shape with a thickness of 0.5 mm, and a cumulative light amount per side of 4000 mJ/cm² was irradiated through the release PET from both the front and back sides using a high-voltage mercury lamp to obtain a transparent gel adhesive sheet.

Next, using the gel adhesive sheet, a laminated body was fabricated by the method shown below.
In such a way that it comes into contact with one of the faces of a special polycarbonate (PC) panel (thickness: 1 mm; width: 300 mm; length: 300 mm) for the first time between a nip roll and a drive roll, the above gel adhesive sheet, whose release film on one of the sides was peeled off, was inserted between the rolls, pasted at a linear pressure of 1 kgf/cm and a speed of 1 m/minute, then the remaining release film was peeled off.
Next, the above PC panel with the pasted gel adhesive sheet was made to face a commercially available float glass panel (thickness: 3 mm; width: 300 mm; length: 300 mm) through the gel adhesive sheet without making contact, and, in such a way that they make contact for the first time between the nip roll and the drive roll, the end portions of the two panels were sandwiched between the nip rolls (linear pressure: 1 kgf/cm; velocity: 1 m/minute) to obtain a laminated body.

In order to prevent the influences of the moisture and the plasticizer, a commercially available PC on which a transparent inorganic oxide membrane has been layered beforehand was used for the special PC panel used in the laminated body.

### (Example 2)

To 100 weight parts of the acrylic acid ester copolymer used in Example 1 were added 2.0 weight parts of photo-initiator "Irgacure 500" and 2.0 weight parts of cross-linking monomer "Viscoat V260" to obtain an ultraviolet photo-cross-linking composition.

Into this ultraviolet photo-cross-linking composition were mixed 60 weight percent of the plasticizer diisodecylphthalate (DIDP) and 10 weight percent of "Aerosil 50" silica ultrafine particle with a primary average particle diameter of 30 nm, which were melt-stirred to obtain a sol composition.

The above sol composition was sandwiched between release PETs, with thicknesses of 75 µm and 100 µm, and hot-melt formed into a sheet shape with a thickness of 0.5 mm, and a cumulative light amount per side of 4000 mJ/cm² was irradiated through the release PET from both the front and back sides using a high-voltage mercury lamp to obtain a transparent gel adhesive sheet. The transparent gel adhesive sheet obtained in this way was used to obtain a laminated body by a similar method to Example 1.

### (Example 3)

Into the ultraviolet photo-cross-linking composition obtained in Example 1 were mixed 20 weight percent of the plasticizer diisodecylphthalate (DIDP) and 2 weight percent of Aerosil 50, which were melt-stirred to obtain a sol composition, and a transparent gel adhesive sheet and laminated body were obtained by a method similar to Example 1.

### (Example 4)

To 100 weight parts of the acrylic acid ester copolymer used in Example 1 were added 2.5 weight parts of the photo-initiator "Benzophenone" and 4.5 weight parts of the cross-linking monomer "Viscoat V260" to obtain an ultraviolet photo-cross-linking composition. Into the ultraviolet photo-cross-linking composition obtained in this way were mixed 48 weight percent of the plasticizer diisodecylphthalate (DIDP) and 5 weight percent of "Aerosil 300", which were melt-stirred to obtain a sol composition, and a transparent gel adhesive sheet and a laminated body were obtained by a method similar to Example 1.

### (Comparative Example 1)

To 100 weight parts of the acrylic acid ester copolymer used in Example 1 were added 0.3 weight parts of the photo-initiator "Irgacure 500" and 0.05 weight parts of the cross-linking monomer "Viscoat V260" to obtain an ultraviolet photo-cross-linking composition.

This ultraviolet photo-cross-linking composition was sandwiched between release PETs, with thicknesses of 75 µm and 100 µm, and hot-melt formed into a sheet shape with a thickness of 0.5 mm, and a cumulative light amount per side of 4000 mJ/cm² was irradiated through the release PET from both the front and back sides using a high-voltage mercury lamp to obtain a transparent adhesive sheet. The transparent adhesive sheet obtained in this way was used to obtain a laminated body by a method similar to Example 1.

### (Comparative Example 2)

To 100 weight parts of the acrylic acid ester copolymer used in Example 1 were added 2.0 weight parts of the photo-initiator "Irgacure 500" and 2.0 weight parts of the cross-linking monomer "Viscoat V260" to obtain an ultraviolet photo-cross-linking composition. The plasticizer diisodecylphthalate (DIDP) was mixed into this ultraviolet photo-cross-linking composition so as to obtain 30 weight percent, which was melt-stirred to obtain a sol composition.

The above sol composition was sandwiched between release PETs, with thicknesses of 75 µm and 100 µm, and hot-melt formed into a sheet shape with a thickness of 0.5 mm, and a cumulative light amount per side of 4000 mJ/cm² was irradiated through the release PET from both the front and back sides using a high-voltage mercury lamp to obtain a transparent gel adhesive sheet. The transparent gel adhesive sheet was used to obtain a laminated body by a method similar to Example 1.

### (Comparative Example 3)

Into the ultraviolet photo-cross-linking composition obtained in Example 1 were mixed 60 weight percent of the plasticizer diisodecylphthalate (DIDP) and 20 weight percent of Aerosil 50, which were melt-stirred to obtain an adhesive agent. The adhesive agent was used to obtain a transparent adhesive sheet and a laminated body by a method similar to Example 1.

### (Comparative Example 4)

Into the ultraviolet photo-cross-linking composition obtained in Example 2 were mixed 60 weight percent of the plasticizer diisodecylphthalate (DIDP) and 10 weight percent of product name "Admafine SO-E2" manufactured by Admatechs Co., LTD., as a fine silica particle with a primary average particle diameter 500 nm, which were melt-stirred to obtain a sol composition, and a transparent gel adhesive sheet and a laminated body were obtained by a method similar to Example 1.

### <Comparative Examination>

The laminated body obtained in each example and comparative example above was used to carry out the following examinations, the results of which are shown in Table 1.

### <Evaluation of Transparency>

Transparency was evaluated by visual inspection of the appearance. Those without cloudiness were evaluated as O (good), and those with cloudiness were evaluated as X (bad).

### <Test of Resistance to Moisture and Heat>

The appearance of the laminated body was observed after letting it sit for one week under an ambient atmosphere of 90% humidity at a temperature of 60°C. Those with no cloudiness, no peeling, and no bubbling were evaluated as O, while they were evaluated as X otherwise.

### <Test of Resistance to Cold and Heat>

The appearance of the laminated body was observed after letting it sit for one week under a temperature cycle of -20°C to 80°C (4 cycles/day). Those with no peeling and no bubbling were evaluated as O, while they were evaluated as X otherwise.

### <Drop Ball Impact Test>

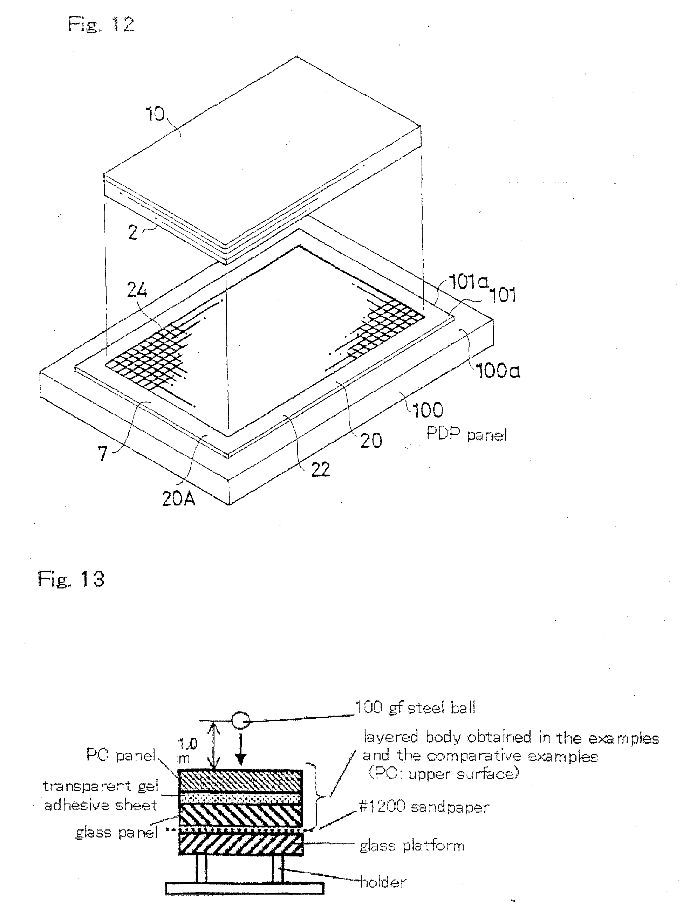

A glass platform (3 mm thickness×100 mm sides) was placed over a fixed cylindrical metallic support (external diameter: 60 mm; internal diameter: 50 mm; height: 40 mm) as in Fig. 13, a sheet of sandpaper was placed above, and further above was placed a laminated body obtained in the examples and the comparative examples so that the PC (polycarbonate) side is the upper face. Then, a steel ball weighing 0.1 kgf was dropped freely from a height of 1 m.
Those cases in which the float glass of the laminated body did not break with the impact value (0.98 J) at this moment were evaluated as O; those in which the breakage occurred were evaluated as X.

### <Holding Strength Measurement Test>

In order to be as much in compliance with JIS Z0237 as possible, [the holding strength] was determined by pasting a 38 µm PET film at the back of the transparent gel adhesive sheets obtained in the example and comparative examples, then bonding an area of 20 mmx20 mm using an SUS panel as stipulated in JIS Z0237 and bonding by a pressure-bonding method comprised of one round trip of a 2 kg roll, and measuring the length of the shift after applying a load of 490 mN (50 gf) for 2 hours in an environment of 40°C.

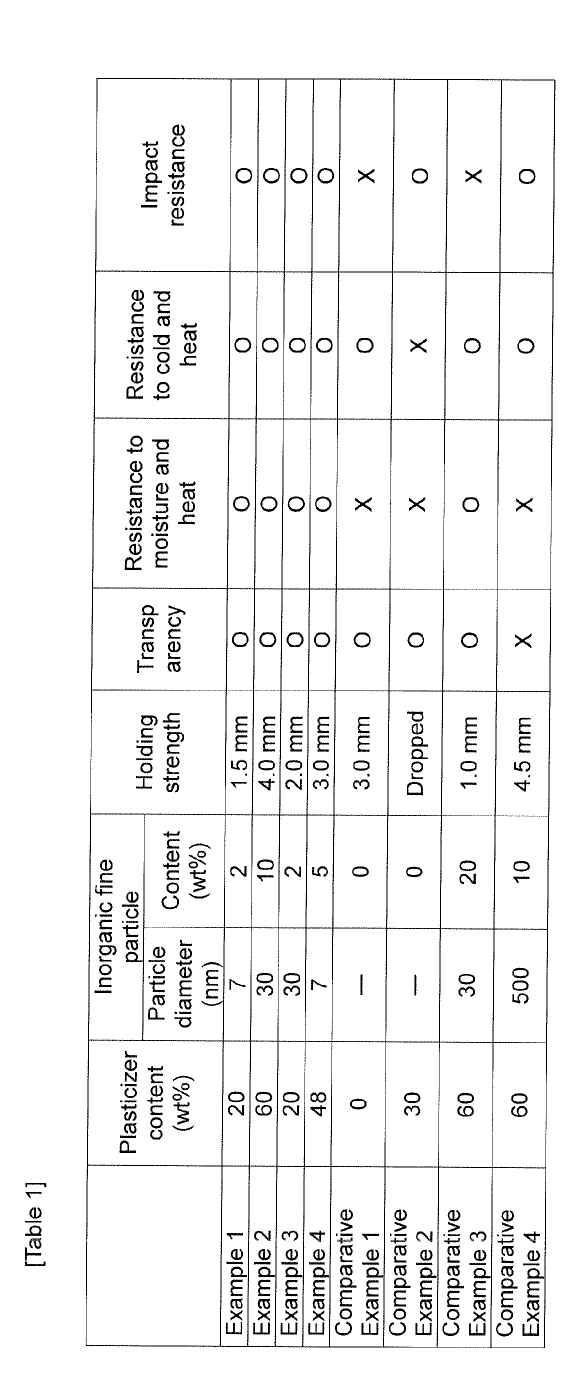

As is apparent from the results of Table 1, it was found that, as opposed to the cases using a transparent gel adhesive sheet of the examples, where an impact-absorbing laminated body whose layering processing was possible at room temperature and whose appearance was satisfactory could be obtained, all the observation items could not be satisfied with the gel adhesive sheets whose plasticizer and ultrafine particle silica were outside the ranges of the present invention.

Next, Examples 5 to 11 and Comparative Examples 5 to 8 were used for comparative examination of the structure of optical filters for display.

### (Example 5)

A transparent adhesive sheet (product name: "CS-9611" manufactured by Nitto Denko Corporation; thickness: 25 µm) sandwiched with release PET (polyethylene terephthalate) films on both surfaces was pasted to one of the surfaces of a polycarbonate sheet (product name: "Stella S300" manufactured by Mitsubishi Plastics Inc.; thickness: 1 mm) while peeling the release PET film on the light peeling side with a laminator at a linear pressure of 9.6 kgf/cm and at ordinary temperature; then, while peeling the release PET on the remaining surface of the transparent adhesive sheet, a near-infrared radiation cut film (manufactured by Mitsubishi Chemical Corporation) was pasted with a laminator as described above; furthermore, on the front surface of the near-infrared radiation cut film, an image quality correction film (manufactured by Mitsubishi Chemical Corporation) and an antiglare film ("ReaLook 8201 UV" manufactured by Nippon Oil & Fat Co., Ltd.) were pasted sequentially in the same way. Next, silica vapor-deposited high-barrier film ("Fine Barrier" manufactured by Reiko Co., Ltd.) was pasted onto the back surface of the polycarbonate sheet with a laminator in the same way as described above; then, a transparent gel adhesive sheet ("Clear Fit" manufactured by Mitsubishi Plastics Inc.; thickness: 0.5 mm) was pasted with a laminator at a linear pressure of 3.2 kgf/cm or less and at ordinary temperature to obtain an optical filter for PDP.
Next, the above optical filter was pasted with a laminator at a linear pressure of 3.2 kgf/cm or less and at ordinary temperature onto the front surface of a mesh portion on the front surface of a mesh-type electromagnetic wave shielding sheet (manufactured by Nippon Filcon, no smoothing treatment of the mesh surface, with back surface adherence) layered on the front surface (display surface) of the PDP panel (Fig. 1).

For the above near-infrared radiation cut film, a PET film with a thickness of 50 µm, having near-infrared radiation absorption coat membranes (thickness: 3 µm) layered on both surfaces and a 25-µm adhesive layer formed on the front surface, was used.
For the image quality correction film, a PET film with a thickness of 50 µm, comprising a toning coat membrane (thickness: 3 µm), provided simultaneously with a Ne light emission cut function and a color adjustment function, and a 25-µm adhesive layer sequentially layered on the front surface, was used.
For the antiglare film, a film with a thickness of 80 µm, comprising TAC (triacetyl cellulose) serving as the substrate, a hard coat layer (thickness: 2 µm), a high refractive index layer containing an inorganic fine particle (thickness: 0.1 µm), a low refractive index layer (thickness: 0.1 µm) containing fluorine series materials, and a protection film (thickness: 40 µm) sequentially layered on the front surface of this substrate, an adhesive layer containing a UV absorption agent (thickness: 25 µm) layered on the back surface of the substrate was used. This antiglare film had a minimal reflectance (specular reflectance: 5°, -5°) of 0.3%, a visual correction value of 0.8%, a total light transmission (JIS K7361) of 95.1 %, an ultraviolet light transmittance (350 nm) of 0%, and a haze value (JIS K7105) of 0.3%.
For the silica vapor-deposited high-barrier film, a PET film with a thickness of 25 µm, having a 20-µm adhesive layer layered on the front surface and an alumina vapor-deposited layer and a topcoat layer layered on the back surface of the PET film, was used.

In addition, for the mesh-type electromagnetic wave shielding sheet, an electromagnetic wave shielding sheet, provided with a mesh portion comprising a thin copper film with a thickness of 9 µm formed on one of the surfaces of a PET sheet with a thickness of 125 µm, the internal side portion thereof being etched leaving a 10-mm-wide peripheral edge portion, and a plurality of stripe portions with a line width of 10 µm and a line thickness of 9 µm crossing with a line interval of 280 µm into a grid shape, was used.

In addition, transparent gel adhesive sheet ("Clear Fit" manufactured by Mitsubishi Plastics Inc.) is a transparent gel adhesive sheet obtained by adding 2.3 weight parts (1.0 weight percent) of photo-initiator (product name "Benzophenone" manufactured by Ciba Specialty Chemicals) and 4.6 weight parts (2.0 weight percent) of cross-linking monomer (product name "Viscoat V260" (1,9-nonanedioldiacrylate) manufactured by Osaka Organic Chemical Industry) to 100 weight parts of acrylic acid ester copolymer (a base polymer comprising 78.4 weight percent of n-butyl acrylate, 19.6 weight percent of 2-ethylhexyl acrylate, and 2.0 weight percent of acrylic acid that were copolymerized, with a Tg of -40°C and a melt viscosity at 130°C of 250,000 (mPa.s)) to obtain an ultraviolet photo-cross-linking composition, mixing therein 100 weight parts (48 weight percent) of diisodecylphthalate (DIDP) as a plasticizer and 12 weight parts (5 weight percent) of silica ultrafine particle (product name "Aerosil 300" manufactured by Japan Aerosil), with a primary average particle diameter of 7 nm, melt-stirring the mixture to obtain a sol composition, sandwiching this sol composition between release PETs, with thicknesses of 75 µm and 100 µm, and hot-melting into a sheet shape with a thickness of 0.5 mm and irradiating with a cumulative light amount per side of 4000 mJ/cm² through the release PET from both the front and back sides using a high-voltage mercury lamp to gel the sol.

### (Example 6)

An antiglare film was pasted onto the front surface of a polycarbonate sheet with a laminator at a linear pressure of 9.6 kgf/cm and at ordinary temperature; a silica vapor-deposited high-barrier film, a near-infrared radiation cut film, and an image quality correction film were pasted onto the back surface of the polycarbonate sheet, sequentially toward the back surface, with the same laminator as described above; furthermore, a transparent gel adhesive sheet was pasted onto the back surface of the image quality correction film with a laminator at a linear pressure 3.2 kgf/cm or less and at ordinary temperature to obtain an optical filter for PDP.
Next, the above-mentioned optical filter was pasted onto the front surface of the mesh portion on the front surface of a mesh-type electromagnetic wave shielding sheet (manufactured by Nippon Filcon, no smoothing treatment of the mesh surface, with back surface adherence) layered on the front surface (display surface) of a PDP, with a laminator at a linear pressure of 3.2 kgf/cm or less and at ordinary temperature (Fig. 2).
Note that, for the polycarbonate sheet, the antiglare film, the silica vapor-deposited high-barrier film, the near-infrared radiation cut film, the image quality correction film, the transparent gel adhesive sheet, and the mesh-type electromagnetic wave shielding sheet, similar ones to Example 5 were used.

### (Example 7)

A near-infrared radiation cut film, an image quality correction film, and an antiglare film were pasted onto the front surface of a polycarbonate sheet, sequentially to the front surface side, with a laminator at a linear pressure of 9.6 kgf/cm and at ordinary temperature, and a silica vapor-deposited high-barrier film and a mesh-type electromagnetic wave shielding film were pasted onto the back surface of the polycarbonate sheet, sequentially to the back surface side, with the same laminator as described above, to constitute a filter main body.
Next, a copper foil tape (width: 25 mm) with an electric conductive adhesive agent was pasted over a width of only 10 mm from the edge into the four peripheral directions of the front surface of the antiglare film; the layered side surface of the filter main body was covered with the copper foil tape, while the remaining portion of the copper foil tape was folded back and pasted onto the back surface of the electromagnetic wave shielding film; a transparent gel adhesive sheet was pasted over the entire surface of the electromagnetic wave shielding surface, with a laminator at a linear pressure of 3.2 kgf/cm or less and at ordinary temperature, to obtain an optical filter for PDP.
Next, the above-mentioned optical filter was pasted onto the front surface (display surface) of the PDP panel with a laminator at a linear pressure of 1.5 kgf/cm or less and at ordinary temperature (Fig. 3).
For the polycarbonate sheet, the antiglare film, the silica vapor-deposited high-barrier film, the near-infrared radiation cut film, the image quality correction film, the transparent gel adhesive sheet, and the mesh-type electromagnetic wave shielding sheet, similar ones to Example 5 were used.

### (Example 8)

An antiglare film was pasted onto the front surface of a polycarbonate sheet, with a laminator at a linear pressure of 9.6 kgf/cm and at ordinary temperature, then a silica vapor-deposited high-barrier film, a near-infrared radiation cut film, an image quality correction film, and a mesh-type electromagnetic wave shielding film were pasted sequentially to the back surface side, onto the back surface of the polycarbonate sheet, with a laminator at a linear pressure of 9.6 kgf/cm and at ordinary temperature, to constitute a filter main body.
Next, a copper foil tape (width: 25 mm) with an electric conductive adhesive agent was pasted over a width of only 10 mm from the edge into the four peripheral directions of the front surface of the antiglare film; the layered side surface of the filter main body was covered with the copper foil tape, while the remaining portion of the copper foil tape was folded back and pasted onto the back surface of the electromagnetic wave shielding film; a transparent gel adhesive sheet was pasted over the entire surface of the electromagnetic wave shielding surface, with a laminator at a linear pressure of 3.2 kgf/cm or less and at ordinary temperature, to obtain an optical filter for PDP.
Next, the above-mentioned optical filter was pasted onto the front surface (display surface) of the PDP with a laminator at a linear pressure of 1.5 kgf/cm or less and at ordinary temperature (Fig. 4).
For the polycarbonate sheet, the antiglare film, the silica vapor-deposited high-barrier film, the near-infrared radiation cut film, the image quality correction film, the transparent gel adhesive sheet, and the mesh-type electromagnetic wave shielding sheet, similar ones to Example 5 were used.

### (Example 9)

Silica vapor-deposited high-barrier films were pasted, with a laminator at a linear pressure of 9.6 kgf/cm and at ordinary temperature, respectively, onto both faces of a polycarbonate sheet; then, a near-infrared radiation cut film, an image quality correction film, and a mesh-type electromagnetic wave shielding film were pasted sequentially to the front surface side, onto the front surface silica vapor-deposited high-barrier film on the front side, with a laminator at a linear pressure of 9.6 kgf/cm and at ordinary temperature; an antiglare film was pasted onto the front surface of the mesh portion on the front surface of the electromagnetic wave shielding sheet via a transparent gel adhesive sheet ("Clear Fit" manufactured by Mitsubishi Plastics Inc.; thickness: 75 µm), with a laminator at a linear pressure of 3.2 kgf/cm or less and at ordinary temperature; furthermore, a transparent gel adhesive sheet ("Clear Fit" manufactured by Mitsubishi Plastics Inc.; thickness: 0.5 mm) was pasted onto the back surface of the polycarbonate sheet, with a laminator at a linear pressure of 3.2 kgf/cm or less and at ordinary temperature, to obtain an optical filter for PDP.
The obtained optical filter was pasted onto the front surface of the PDP panel with a laminator at a linear pressure of 1.5 kgf/cm or less and at ordinary temperature (Fig. 5).
For the polycarbonate sheet, the antiglare film, the silica vapor-deposited high-barrier film, the near-infrared radiation cut film, the image quality correction film, and the mesh-type electromagnetic wave shielding sheet, similar ones to Example 5 were used.

### (Example 10)

Silica vapor-deposited high-barrier films were pasted, with a laminator at a linear pressure of 9.6 kgf/cm and at ordinary temperature, respectively, onto both faces of a polycarbonate sheet; then, a near-infrared radiation cut film and an image quality correction film were pasted onto the back surface of the silica vapor-deposited high-barrier film on the back surface side, with a laminator at a linear pressure of 9.6 kgf/cm and at ordinary temperature; a mesh-type electromagnetic wave shielding film (manufactured by Nippon Filcon, no smoothing treatment of the mesh surface, with back surface adherence) was pasted onto the surface of the other silica vapor-deposited high-barrier film, with the same laminator as described above; an antiglare film was pasted onto the front surface of the mesh portion on the front surface of the electromagnetic wave shielding sheet via a transparent gel adhesive sheet ("Clear Fit" manufactured by Mitsubishi Plastics Inc.; thickness: 75 µm), with a laminator at a linear pressure of 3.2 kgf/cm or less and at ordinary temperature; furthermore, a transparent gel adhesive sheet ("Clear Fit" manufactured by Mitsubishi Plastics Inc.; thickness: 0.5 mm) was pasted onto the back surface of the polycarbonate sheet, with a laminator at a linear pressure of 3.2 kgf/cm or less and at ordinary temperature, to obtain an optical filter for PDP.
The obtained optical filter was pasted onto the front surface of the PDP with a laminator at a linear pressure of 1.5 kgf/cm or less and at ordinary temperature (Fig. 6).
For the polycarbonate sheet, the antiglare film, the silica vapor-deposited high-barrier film, the near-infrared radiation cut film, the image quality correction film, and the mesh-type electromagnetic wave shielding sheet, similar ones to Example 5 were used.

### (Example 11)

Silica vapor-deposited high-barrier films were pasted, with a laminator at a linear pressure of 9.6 kgf/cm and at ordinary temperature, respectively, onto both faces of a polycarbonate sheet; then, a mesh-type electromagnetic wave shielding film (manufactured by Nippon Filcon, no smoothing treatment of the mesh surface, with back surface adherence) was pasted onto the front surface of the silica vapor-deposited high-barrier film on the front side, with the same laminator as described above; a near-infrared radiation cut film, an image quality correction film, and an antiglare film were pasted sequentially to the front surface side onto the front surface of the mesh portion on the front surface of the electromagnetic wave shielding sheet via a transparent gel adhesive sheet ("Clear Fit" manufactured by Mitsubishi Plastics Inc.; thickness: 75 µm), with a laminator at a linear pressure of 3.2 kgf/cm or less and at ordinary temperature. A transparent gel adhesive sheet ("Clear Fit" manufactured by Mitsubishi Plastics Inc.; thickness: 0. 5 mm) was pasted onto the back surface of the other silica vapor-deposited high-barrier film, with a laminator at a linear pressure of 3.2 kgf/cm or less at ordinary temperature, to obtain an optical filter for PDP.
The obtained optical filter was pasted onto the front surface of the PDP with a laminator at a linear pressure of 1.5 kgf/cm or less and at ordinary temperature (Fig. 7).
For the polycarbonate sheet, the antiglare film, the silica vapor-deposited high-barrier film, the near-infrared radiation cut film, the image quality correction film, and the mesh-type electromagnetic wave shielding sheet, similar ones to Example 5 were used.

### (Comparative Example 5)

Except for changing the transparent gel adhesive sheet of Example 5 ("Clear Fit" manufactured by Mitsubishi Plastics Inc.; thickness: 0.5 mm) to the transparent adhesive sheet ("VHBY9410J" manufactured by 3M; thickness: 1.0 mm), an optical filter was obtained with similar constitution and preparation method to Example 5 and similarly pasted onto a PDP.

### (Comparative Example 6)

Except for changing the transparent gel adhesive sheet of Example 7 ("Clear Fit" manufactured by Mitsubishi Plastics Inc.; thickness: 0.5 mm) to the transparent adhesive sheet ("VHBY9410J" manufactured by 3M; thickness: 1.0 mm), an optical filter was obtained with similar constitution and preparation method to Example 7 and similarly pasted onto a PDP.

### (Comparative Example 7)

Except for changing the transparent gel adhesive sheet of Example 7 ("Clear Fit" manufactured by Mitsubishi Plastics Inc.; thickness: 0.5 mm) to the transparent adhesive sheet (product name: "CS-9611" manufactured by Nitto Denko Corporation; thickness: 25 µm), an optical filter was obtained with similar constitution and preparation method to Example 7 and similarly pasted onto a PDP.

### (Comparative Example 8)

Except for changing the transparent gel adhesive sheet of Comparative Example 7 (manufactured by Nitto Denko Corporation product name: "CS-9611 "; thickness: 25 µm) to the transparent adhesive sheet (product name: "HJ 9150W" manufactured by Nitto Denko Corporation; thickness: 50 µm)), an optical filter was obtained with similar constitution and preparation method to Comparative Example 7 and similarly pasted onto a PDP.

The optical filters and PDP structures obtained by Examples 5 to 11 and Comparative Examples 5 to 8 were used to carry out the following examinations, the results of which are shown in Table 2.

### <Initial Optical Properties>

The optical filters obtained by Examples 5 to 11 and Comparative Examples 5 to 8 were pasted onto an n-float glass (soda lime glass; thickness: 3 mm) as a substitute for the PDP panel, with a laminator at a linear pressure of 9.6 kgf/cm and at ordinary temperature, the transmittance at the wavelength of 300 nm to 1200 nm was measured with a spectrophotometer (Hitachi U-4000), and those that satisfied the required properties (average luminous transmittance of 40% or above, transmittance at Ne cut wavelength of 20% to 30%, transmittance at 850 nm to 1160 nm of 10% or less) were evaluated as O, and those that did not were evaluated as X.

### <Layering Property>

The asperity portion of the electromagnetic wave shielding film of the PDP structures obtained by Examples 5 to 11 and Comparative Examples 5 to 8 was visually observed using a 10X magnification loupe; those that are pasted without bubble were evaluated as O, and those where bubble occurred were evaluated as X.

### <Durability of the Intimate Contact with the PDP Panel>

Heat resistance: The PDP structures obtained by Examples 5 to 11 were maintained inside a hot air-circulating dryer at 80°C for 500 hrs, then the asperity portions of the electromagnetic wave shielding film were checked visually for the presence or the absence of bubble occurrence and the presence or absence of peeling. Those without occurrence of bubble and peeling were evaluated as O, and those with the occurrence were evaluated as X.
Heat shock: The PDP structures obtained by Examples 5 to 11 were maintained inside a programmable constant temperature and humidity chamber for 250 cycles of 1 hr at -20°C and 1 hr at 80°C, then the asperity portions of the electromagnetic wave shielding film were checked visually for the presence or the absence of bubble occurrence and the presence or absence of peeling. Those without occurrence of bubble and peeling were evaluated as O, and those with the occurrence were evaluated as X.
For Comparative Examples 5 to 8, since the evaluation of the early-stage layering capability was bad, there was no meaning in evaluating the durability of the intimate contact with the PDP panel (heat resistance and heat-shock), and thus they were not evaluated.

**[Table 2]**

| | | | | |
|---|---|---|---|---|
| | | | Durability of the intimate contact with the PDP panel | |
| | Initial optical property | Layering property | Heat resistance | Heat shock |
| Example 5 | ○ | ○ | ○ | ○ |
| Example 6 | ○ | ○ | ○ | ○ |
| Example 7 | ○ | ○ | ○ | ○ |
| Example 8 | ○ | ○ | ○ | ○ |
| Example 9 | ○ | ○ | ○ | ○ |
| Example 10 | ○ | ○ | ○ | ○ |
| Example 11 | ○ | ○ | ○ | ○ |
| Comparative Example 5 | ○ | X | - | - |
| Comparative Example 6 | ○ | X | - | - |
| Comparative Example 7 | ○ | X | - | - |
| Comparative Example 8 | ○ | X | - | - |

## Claims

1. A transparent gel adhesive agent, which is a transparent gel adhesive agent constituted by a transparent gel comprised of a three-dimensionally cross-linked polymer swollen by a liquid containing a plasticizer and an inorganic fine particle,
said plasticizer being a fluid body whose solidifying point is -20°C or below and contained in the gel at 10 to 70 weight percent,
said inorganic fine particle having a primary average particle diameter of 200 nm or less and being contained in the gel at 1 to 15 weight percent,
the resin constituting said three-dimensionally cross-linked polymer being resin with a glass transition temperature (Tg) of -20°C or below and a melt viscosity at 130°C of 50,000 mPa·s or more.

2. The transparent gel adhesive agent as recited in Claim 1, wherein the holding strength at a load of 490 mN (50 gf) x2 hours and at 40°C is 5 mm or less in tests in accordance with JIS Z0237.

3. A transparent gel adhesive sheet comprising the transparent gel adhesive agent as recited in Claim 1 that has been sheet-formed.

4. A transparent gel adhesive sheet obtained by sheet-forming a sol composition containing the resin constituting the three-dimensionally cross-linked polymer as recited in Claim 1, a cross-linking monomer, a photo-initiator, the plasticizer as recited in Claim 1, and the inorganic fine particle as recited in Claim 1, and photo-cross-linking the obtained sheet-formed body to gel the sol.

5. An impact-absorbing laminated body, which is an impact-absorbing laminated body provided with the transparent gel adhesive sheet as recited in Claim 3 or 4 as an intermediate layer, wherein the layers on the two sides sandwiching the transparent gel adhesive sheet is of one or more types of a panel material, a sheet material, or a film material, chosen from a glass matter, a synthetic resin matter, a metallic matter, and an inorganic (ceramics) matter.

6. The impact-absorbing laminated body as recited in Claim 5, wherein at least one layer of the layers on the two sides sandwiching the transparent gel adhesive sheet is a synthetic resin layer comprising a synthetic resin matter and comprising a transparent inorganic vapor-deposition membrane layer with a high gas barrier property layered over the surface on the transparent gel adhesive sheet side of said synthetic resin layer.

7. An optical filter for display, which is an optical filter to be pasted onto the front side of a display panel,
provided with a transparent gel adhesive layer comprising the transparent gel adhesive agent as recited in Claim 1 as a pasting layer for pasting onto the front surface of the display panel or onto the front surface of any layer layered onto said front surface, or as a pasting layer for pasting between each layer constituting the optical filter.

8. The optical filter for display as recited in Claim 7 provided with a filter main body, wherein, on one side or on both sides of a transparent base body comprising a transparent film or sheet, any layer among a low visible light reflection layer, a near-infrared radiation cut layer, an image quality correction layer, an electromagnetic wave shielding layer, and a moisture-permeation prevention layer, or a plurality of layers comprising a combination of two types or more of these layers, and provided with a constitution wherein a transparent gel adhesive layer is layered onto the back surface of said filter main body.

9. The optical filter for display as recited in Claim 7 provided with an electromagnetic wave shielding layer as the back-most surface side layer layered on the back-most surface of the filter main body, and provided with a constitution wherein one side edge portion of an electric conductive member is connected to an electric conductive surface of the electromagnetic wave shielding layer, said electric conductive member covering an side surface portion of the filter main body while at the same time the other side edge portion of said electric conductive member being placed inside the front-most surface of the filter main body, and a transparent gel adhesive layer being layered on the electric conductive surface of the filter main body with the one side edge portion of the electric conductive member in an intercalated state.

10. The optical filter for display as recited in Claim 8 or 9, wherein, in the constitution of the filter main body, the layered surface where the transparent gel adhesive layer is layered is an asperity-patterned surface comprising a stripe portion with a protuberance height of 1 µm to 1 mm.

11. The optical filter for display as recited in Claim 7, wherein the display front surface or the front surface of the layer layered on said front surface, where the transparent gel adhesive layer is to be pasted, is an asperity-patterned surface comprising a stripe portion with a protuberance height of 1 µm to 1 mm.

12. The optical filter for display as recited in Claim 10 or 11, wherein said asperity-patterned surface comprises a grid-shaped stripe portion.

13. An optical filter for display, which is an optical filter to be pasted onto the front side of a display panel,
provided with a constitution comprising the provision of at least an electromagnetic wave shielding layer on one side or on both sides of a transparent base body, said electromagnetic wave shielding layer being constituted from an electromagnetic wave shielding film or sheet provided with, on the inner side portion leaving out the peripheral edge portion of a film or sheet comprised of an electric conductive material, a mesh portion comprised of a stripe portion connected to said peripheral edge portion, a transparent gel adhesive layer comprising a transparent gel adhesive agent as recited in Claim 1 being layered on said mesh portion, and the peripheral edge portion of the electromagnetic wave shielding film or sheet being exposed.

14. The optical filter for display as recited in Claim 7, wherein the transparent gel adhesive layer is a layered transparent gel adhesive sheet obtained by sheet-forming a sol composition containing a resin that will constitute a three-dimensionally cross-linked polymer, a cross-linking monomer, a photo-initiator, a plasticizer, and an inorganic fine particle, and photo-cross-linking the sheet-formed body.

15. A display surface structure provided with a constitution, wherein the optical filter for display as recited in Claim 7 is layered on the front surface of the display panel or on the front surface of the front-most layer layered on the front surface.

16. The display surface structure as recited in Claim 15 provided with a constitution, wherein the layer formed on the front surface of the display panel is provided with, on the inner side portion leaving out the peripheral edge portion of the layer comprised of an electric conductive material, a mesh portion comprised of a stripe portion connected to said peripheral edge portion, the optical filter for display as recited in Claim 7 being layered on the front surface of said mesh portion, and the peripheral edge portion of the electromagnetic wave shielding film being exposed to the front side.
